(19) Europäisches Patentamt / European Patent Office / Office européen des brevets

(11) EP 3 001 228 A1

(12) # EUROPEAN PATENT APPLICATION

published in accordance with Art. 153(4) EPC

(43) Date of publication:
**30.03.2016 Bulletin 2016/13**

(21) Application number: **14801811.2**

(22) Date of filing: **22.05.2014**

(51) Int Cl.:
***G02B 5/22*** *(2006.01)* ***C08K 3/22*** *(2006.01)*
***C08L 101/06*** *(2006.01)*

(86) International application number:
**PCT/JP2014/063546**

(87) International publication number:
**WO 2014/189099 (27.11.2014 Gazette 2014/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.05.2013 JP 2013109233**
**24.07.2013 JP 2013153985**

(71) Applicant: **Fujifilm Corporation**
**Minato-ku**
**Tokyo 106-8620 (JP)**

(72) Inventors:
- **KAWASHIMA Takashi**
  **Haibara-gun**
  **Shizuoka 421-0396 (JP)**
- **INASAKI Takeshi**
  **Haibara-gun**
  **Shizuoka 421-0396 (JP)**
- **TAKAHASHI Hidenori**
  **Haibara-gun**
  **Shizuoka 421-0396 (JP)**

(74) Representative: **Hoffmann Eitle**
**Patent- und Rechtsanwälte PartmbB**
**Arabellastraße 30**
**81925 München (DE)**

(54) **NEAR-INFRARED-ABSORBING COMPOSITION, NEAR-INFRARED CUT-OFF FILTER AND PRODUCTION METHOD USING SAME, AND CAMERA MODULE**

(57) Provided are a near-infrared-absorbing composition capable of forming a cured film having excellent heat resistance while maintaining high near-infrared shielding properties, a near-infrared cut-off filter, a production method using the same, and a camera module.

Provided are a near-infrared-absorbing composition including a compound obtained from a reaction between a polymer (A1) having an acid group or a salt thereof and a copper component and a near-infrared-absorbing composition including a compound obtained from a reaction between a polymer (A1) having an acid group or a salt thereof and a copper component and a copper complex obtained from a reaction between a low-molecular-weight compound having a coordination site and a copper component.

FIG. 1

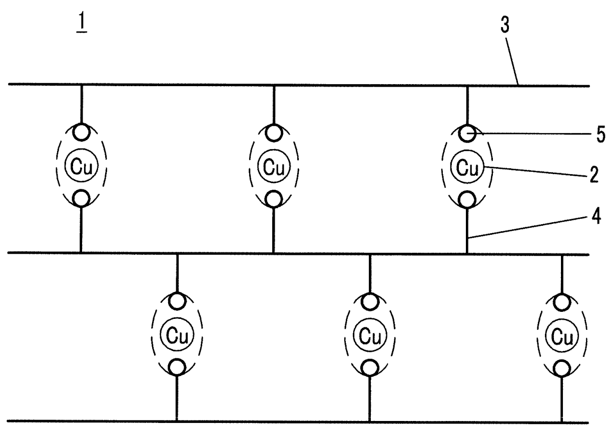




Printed by Jouve, 75001 PARIS (FR)

**Description**

BACKGROUND OF THE INVENTION

1. Field of the Invention

The present invention relates to a near-infrared-absorbing composition, a near-infrared cut-off filter and a production method using the same, and a camera module.

2. Description of the Related Art

A CCD or CMOS imaging sensor that is a solid-state imaging element for color images has been used for video cameras, digital still cameras, mobile phones equipped with a camera function, and the like. In the solid-state imaging element, since a silicon photodiode having sensitivity to near-infrared rays is used in the light-receiving section, it is necessary to correct the luminosity factor, and a near-infrared cut-off filter is frequently used.

As a material for forming the above-described near-infrared cut-off filter, JP2010-134457A discloses a near-infrared-ray shielding film including an infrared shielding resin formed by adding a metallic compound to a copolymer of a reactant between (meth)acrylamide and phosphoric acid or a hydrolysate thereof and a compound having an ethylenic unsaturated bond.

In addition, JP2001-213918A discloses a near-infrared-absorbing composition for which a sulfonic acid ester copper complex is used. JP2009-13200A discloses an adhesive including a polyester-based resin having a hydroxyl group and/or a carboxyl group in a side chain and a reactive compound capable of reacting with the hydroxyl group and/or the carboxyl group in the polyester-based resin.

**SUMMARY OF THE INVENTION**

Here, the infrared shielding resin disclosed by JP2010-134457A has an acid group containing phosphorus and is thus considered to have insufficient heat resistance. In addition, the near-infrared-absorbing composition disclosed by JP2001-213918A causes a reaction between a monomer having an ethylenic unsaturated bond and copper, but a polymerization reaction of the monomer having an ethylenic unsaturated bond does not easily proceed in the presence of copper and tends to have difficulty in increasing the molecular weight.

The present invention intends to solve such problems, and an object of the present invention is to provide a near-infrared-absorbing composition capable of forming a cured film having excellent heat resistance while maintaining high near-infrared shielding properties.

The present inventors found that the above-described problems can be solved by employing a compound obtained by reacting a polymer having an acid group or a salt thereof and a copper component in which the acid value of an acid structure containing a phosphorus atom is a certain value or lower or which does not substantially have an acid structure containing phosphorus.

Specifically, the above-described problems were solved using the following means <1>, preferably, means <2> to <27>.

<1> A near-infrared-absorbing composition including a compound obtained from a reaction between a polymer (A1) having an acid group or a salt thereof and a copper component.

<2> The near-infrared-absorbing composition according to <1>, in which an acid value based on an acid structure represented by Formula (1) below in the polymer (A1) is 3.5 meq/g or lower:

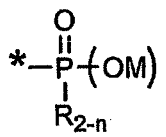

(1)

in Formula (1), R represents a hydrogen atom or a monovalent organic group, n represents 1 or 2, and M represents a hydrogen atom, or an atom or an atomic group constituting a salt; "*" represents a position at which the acid structure is linked to other portions.

<3> A near-infrared-absorbing composition including a compound obtained from a reaction between a polymer (A1) having an acid group or a salt thereof and a copper component, in which the polymer (A1) does not substantially have an acid structure represented by Formula (1) below:

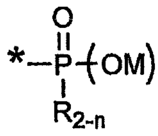

(1)

in Formula (1), R represents a hydrogen atom or a monovalent organic group, n represents 1 or 2, and M represents a hydrogen atom, or an atom or an atomic group constituting a salt; "*" represents a position at which the acid structure is linked to other portions.

<4> The near-infrared-absorbing composition according to any one of <1> to <3>, in which a percentage of an increase in a mass of the compound obtained from the reaction between the polymer (A1) and the copper component is 25% or lower of the mass thereof before being left to stand under conditions of 25°C and a relative humidity of 95% for five hours.

<5> The near-infrared-absorbing composition according to any one of <1> to <4>, in which the polymer (A1) includes at least one selected from a carboxylic acid group and a salt thereof, a sulfonic acid group and a salt thereof, an imidic acid group and a salt thereof, and a methide acid group and a salt thereof.

<6> The near-infrared-absorbing composition according to any one of <1> to <4>, in which the acid group is a carboxylic acid group.

<7> The near-infrared-absorbing composition according to any one of <1> to <4>, in which the acid group is a sulfonic acid group.

<8> The near-infrared-absorbing composition according to <5> or <7>, in which an acid value of the polymer (A1), which is derived from the sulfonic acid group or the salt thereof, is 2 meq/g or higher.

<9> The near-infrared-absorbing composition according to any one of <1> to <8>, in which a weight-average molecular weight of the polymer (A1) is in a range of 6000 to 200,000.

<10> The near-infrared-absorbing composition according to any one of <1> to <9>, in which the acid group or the salt thereof is included in a side chain of the polymer (A1).

<11> The near-infrared-absorbing composition according to any one of <1> to <10>, in which the polymer (A1) includes a constitutional unit represented by Formula (A1-1) below:

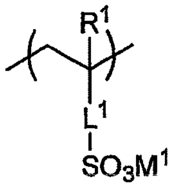

(A 1 − 1)

in Formula (A1-1), $R^1$ represents a hydrogen atom or a methyl group, $L^1$ represents a single bond or a divalent linking group, and $M^1$ represents a hydrogen atom, or an atom or an atomic group constituting a salt with a sulfonic acid group.

<12> The near-infrared-absorbing composition according to any one of <1> to <11>, in which the polymer (A1) includes a constitutional unit represented by Formula (A1-3) below:

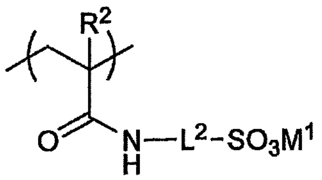

(A 1 − 3)

in Formula (A1-3), $R^2$ represents a hydrogen atom or a methyl group, $L^2$ represents a divalent linking group, and $M^1$ represents a hydrogen atom, or an atom or an atomic group constituting a salt with a sulfonic acid group.

<13> The near-infrared-absorbing composition according to any one of <1> to <12>, in which the polymer (A1) includes a constitutional unit represented by Formula (A1-4) below:

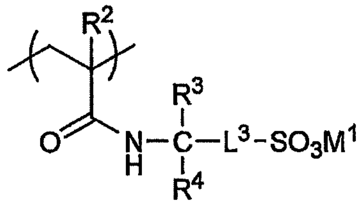

(A1-4)

in Formula (A1-4), $R^2$ represents a hydrogen atom or a methyl group, each of $R^3$ and $R^4$ independently represents a hydrogen atom or an alkyl group, $L^3$ represents a divalent linking group, and $M^1$ represents a hydrogen atom, or an atom or an atomic group constituting a salt with a sulfonic acid group.

<14> The near-infrared-absorbing composition according to <12> or <13>, in which $L^2$ in Formula (A1-3) or $L^3$ in Formula (A1-4) is a divalent hydrocarbon group.

<15> The near-infrared-absorbing composition according to <12> or <13>, in which $L^2$ in Formula (A1-3) or $L^3$ in Formula (A1-4) is an alkylene group having 1 to 30 carbon atoms.

<16> The near-infrared-absorbing composition according to any one of <1> to <15>, further including at least one of water or an organic solvent.

<17> A near-infrared-absorbing composition including a copper complex having an acid group ion site in a polymer (A2) having an acid group ion, as a ligand, in which the polymer (A2) does not substantially have an acid structure represented by Formula (1) below:

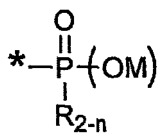

(1)

in Formula (1), R represents a hydrogen atom or a monovalent organic group, n represents 1 or 2, and M represents a hydrogen atom, or an atom or an atomic group constituting a salt; "*" represents a position at which the acid structure is linked to other portions.

<18> A near-infrared-absorbing composition including a compound obtained from a reaction between a polymer (A1) having an acid group or a salt thereof and a copper component; and

a copper complex obtained from a reaction between a low-molecular-weight compound having a coordination site and a copper component.

<19> The near-infrared--absorbing composition according to <18>, in which the low-molecular-weight compound having the coordination site is a low-molecular-weight compound having an acid group or a salt thereof.

<20> The near-infrared-absorbing composition according to <18> or <19>, in which a molecular weight of the low-molecular-weight compound is 1000 or lower.

<21> The near-infrared-absorbing composition according to <19> or <20>, in which the low-molecular-weight compound includes at least one of a sulfonic acid group, a carboxylic acid group, and an acid group having a phosphorus atom.

<22> A near-infrared-absorbing composition including a near-infrared-absorbing substance, in which a percentage of a change in absorbance at a wavelength of 400 nm and a percentage of a change in absorbance at a wavelength of 800 nm before and after the near-infrared-absorbing composition being heated at 200°C for five minutes are both 5% or lower.

<23> A production method of a near-infrared-absorbing composition, including:

a step of producing a polymer (A1) having an acid group or a salt thereof using a polymerizable monomer having an acid group or a salt thereof; and

a step of producing a near-infrared-absorbing compound by reacting the polymer (A1) and a copper component.

<24> A near-infrared cut-off filter obtained using the near-infrared-absorbing composition according to any one of <1> to <22>.

<25> A near-infrared cut-off filter, in which a percentage of a change in absorbance at a wavelength of 400 nm and a percentage of a change in absorbance at a wavelength of 800 nm before and after the near-infrared cut-off filter is heated at 200°C for five minutes are both 5% or lower.

<26> A production method of a near-infrared cut-off filter, including: a step of forming a film by applying the near-infrared-absorbing composition according to any one of <1> to <22> to a light-receiving side of a solid-state imaging

element.

<27> A camera module including: a solid-state imaging element; and a near-infirared cut-off filter disposed on a light-receiving side of the solid-state imaging element, in which the near-infrared cut-off filter is the near-infrared cut-off filter according to <24> or <25>.

According to the present invention, it has become possible to provide a cured film having excellent heat resistance while maintaining high near-infrared shielding properties.

## BRIEF DESCRIPTION OF THE DRAWINGS

Fig. 1 is an imaginary view illustrating an example of a compound including a polymer (A2) in the present invention and a copper ion.

Fig. 2 is a schematic sectional view illustrating a constitution of a camera module including a solid-state imaging element according to an embodiment of the present invention.

Fig. 3 is a schematic sectional view of the solid-state imaging element according to the embodiment of the present invention.

Fig. 4 is a schematic sectional view illustrating an example of a periphery of a near-infrared cut-off filter in the camera module.

Fig. 5 is a schematic sectional view illustrating an example of the periphery of the near-infrared cut-off filter in the camera module.

Fig. 6 is a schematic sectional view illustrating an example of the periphery of the near-infrared cut-off filter in the camera module.

## DESCRIPTION OF THE PREFERRED EMBODIMENTS

Hereinafter, the contents of the present invention will be described in detail.

In the present specification, "to" used to express numerical ranges will be used with a meaning that numerical values before and after the "to" are included in the numerical ranges as the lower limit value and the upper limit value.

In the present specification, "(meth)acrylates" represent acrylates and methacrylates, "(meth)acrylic" represents acrylic and methacrylic, and "(meth)acryloyl" represents acryloyl and methacryloyl.

In the present specification, "monomers" and "monomers" refer to the same thing. In addition, "polymers" and "polymers" refer to the same thing.

In the present specification, regarding the denoting of a group (atomic group), a group not denoted with 'substituted' or 'unsubstituted' refers to both a group (atomic group) having no substituents and a group (atomic group) having a substituent.

A near-infrared-ray in the present invention refers to a ray having a maximum absorption wavelength in a range of 700 nm to 2500 nm and particularly in a range of 700 nm to 1000 nm.

The main chain of the polymer in the present invention refers to an atom or an atomic group required to form a skeleton (long chain) of the polymer. In addition, an atom directly bonded to this main chain is also considered as a part of the main chain. The side chain of the polymer in the present invention refers to a portion other than the main chain. Here, a functional group directly bonded to the main chain (for example, an acid group described below or a salt thereof) is also considered as the side chain.

<Near-infrared-absorbing composition>

A first near-infrared-absorbing composition of the present invention includes a compound obtained from a reaction between a polymer (A1) having an acid group or a salt thereof and a copper component. In addition, the near-infrared-absorbing composition preferably includes the compound obtained from the reaction between the polymer (A1) having an acid group or a salt thereof and the copper component, and the acid value of the polymer (A1) based on an acid structure represented by Formula (1) below is preferably 3.5 meq/g or lower.

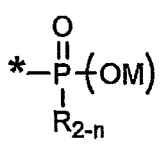

(1)

In Formula (1), R represents a hydrogen atom or a monovalent organic group, n represents 1 or 2, M represents a hydrogen atom, or an atom or an atomic group constituting a salt, and examples thereof include a metallic atom such as sodium and an atomic group such as tetrabutylammonium. "*" represents a position at which the acid structure is linked to other portions.

In addition, the near-infrared-absorbing composition of the present invention includes the compound obtained from the reaction between the polymer (A1) and the copper component, and the polymer (A1) does not substantially have the acid structure represented by Formula (1). Here, the "polymer not substantially having the acid structure" means that, for example, the polymer does not have the acid structure enough to react with the copper component and develop a near-infrared-absorbing function.

The compound obtained from the reaction between the polymer (A1) and the copper component is, for example, a compound including a polymer (A2) having an acid group ion and a copper ion and is preferably a copper complex having an acid group ion site in the polymer (A2) as a ligand. Fig. 1 is an imaginary view illustrating an example of the compound including the polymer (A2) having an acid group ion and a copper ion, in which "1" indicates the compound including the polymer (A2) having an acid group ion and a copper ion, "2" indicates a copper ion, "3" indicates a main chain of the polymer (A2), "4" indicates a side chain of the polymer (A2), and "5" indicates an acid group ion site 5 derived from an acid group or a salt thereof respectively. In the present invention, the acid group ion site 5 is bonded (for example, coordination bond) to copper 2, and a crosslinking structure is formed between the side chains 4 of the polymer (A2) from copper 2 as a starting point. When the near-infrared-absorbing composition has the above-described constitution, it is assumed that, even when the near-infrared-absorbing composition is heated, the structure of the compound 1 does not easily break, and a cured film having excellent heat resistance is obtained.

In the compound (copper complex) obtained from the reaction between the polymer (A1) and the copper component, the percentage of an increase in the mass thereof is preferably 60% or lower of the mass thereof before the compound is left to stand under conditions of 25°C and a relative humidity of 95% for five hours. Hereinafter, there will be cases in which a test in which the near-infrared-absorbing composition is left to stand under conditions of 25°C and a relative humidity of 95% will be simply referred to as a water absorption rate test. In the compound obtained from the reaction between the polymer (A1) and the copper component, the percentage of an increase in the mass thereof is preferably 60% or lower, more preferably 25% or lower, still more preferably 10% or lower, and particularly preferably 3% or lower of the mass thereof before the compound is left to stand under conditions of 25°C and a relative humidity of 95% for five hours. In addition, the time of the water absorption rate test may be set to be long and may be set to 10 hours or 20 hours. Even in this case, the percentage of an increase in the mass of the compound obtained from the reaction between the polymer (A1) and the copper component preferably satisfies the above-described range. In a case in which the test time is set to be long, as the percentage of an increase in the mass thereof decreases, a near-infrared cut-off filter having higher moisture resistance can be obtained. In addition, the lower limit of the percentage of an increase in the mass of the compound obtained from the reaction between the polymer (A1) and the copper component is 0%, and the mass preferably does not increase even after the water absorption test.

«Copper component»

The copper component is preferably a compound including divalent copper. The content of copper in the copper component used in the present invention is preferably in a range of 2% by mass to 40% by mass and more preferably in a range of 5% by mass to 40% by mass. Only one copper component may be used or two or more copper components may be used. As the compound including copper, it is possible to use, for example, a copper oxide or a copper salt. The copper salt is more preferably divalent copper. Examples of the copper salt include copper hydroxide, copper acetate, copper chloride, copper formate, copper stearate, copper benzoate, copper ethylacetoacetate, copper pyrophosphate, copper naphthenate, copper citrate, copper nitrate, copper sulfate, copper carbonate, copper chlorate, copper (meth)acrylate, and copper perchlorate, and copper hydroxide, copper acetate, copper chloride, copper sulfate, copper benzoate, and copper (meth)acrylate are preferred, and copper hydroxide, copper acetate, and copper sulfate are particularly preferred.

The amount of the copper component causing a reaction of the polymer (A1) is preferably in a range of 0.05 equivalent weights to 1 equivalent weight, more preferably in a range of 0.1 equivalent weights to 0.8 equivalent weights, and still more preferably in a range of 0.2 equivalent weights to 0.5 equivalent weights with respect to 1 equivalent weight of the acid group in the polymer (A1) or the salt thereof. When the amount of the copper component is set in the above-described range, there is a tendency that a cured film having higher near-infrared shielding properties is obtained.

<<Polymer (A1) having acid group or salt thereof>>

The polymer (A1) used in the first near-infrared-absorbing composition of the present invention is not particularly limited as long as the polymer has an acid group or a salt thereof, and only one polymer may be used, or two or more

polymers may be used.

The acid group included in the polymer (A1) is not particularly limited as long as the acid group is capable of reacting with the above-described copper component, but is preferably an acid group forming a coordination bond with the copper component. Specific examples thereof include acid groups having an acid dissociation constant (pKa) of 12 or lower, and a sulfonic acid group, a carboxylic acid group, an imidic acid group, and a methide acid group are preferred. Only one acid group or two or more acid groups may be used.

The polymer (A1) preferably includes, as the acid group or the salt thereof, at least one selected from a carboxylic acid group and a salt thereof, a sulfonic acid group and a salt thereof, an imidic acid group and a salt thereof, and a methide acid group and a salt thereof.

The imidic acid group is preferably represented by General Formula (X1) below.

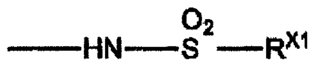
General Formula (X1)

(In General Formula (X1), $R^{X1}$ represents an organic group.)

In General Formula (X1), $R^{X1}$ represents an organic group and is preferably an alkyl group or an aryl group. The alkyl group may have a linear shape, a branched shape, or a cyclic shape. The number of carbon atoms in the alkyl group is preferably in a range of 1 to 10, more preferably in a range of 1 to 6, still more preferably in a range of 1 to 3, and particularly preferably 1 or 2. The number of carbon atoms in the aryl group is preferably in a range of 6 to 18, more preferably in a range of 6 to 10, and still more preferably in a range of 6 to 8.

In a case in which $R^{X1}$ represents an alkyl group, a fluorine-substituted alkyl group is preferred, a perfluoroalkyl group is more preferred, and a trifluoromethyl group is still more preferred.

The methide acid group is preferably represented by General Formula (X2) below.

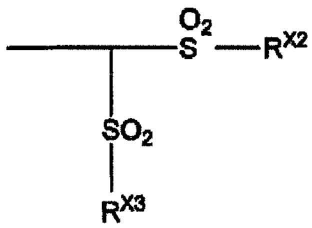
General Formula (X2)

(In General Formula (X2), each of $R^{X2}$ and $R^{X3}$ independently represents an organic group.)

In General Formula (X2), each of $R^{X2}$ and $R^{X3}$ independently represents an organic group, is identical to $R^{X1}$ in General Formula (X1), and also has the same preferred range as that.

The atom constituting a salt of the acid group used in the present invention is preferably a metallic atom and more preferably an alkali metal atom or an alkaline-earth metallic atom. Examples of the alkali metal atom include sodium, potassium, and the like. Examples of the alkaline-earth metallic atom include calcium, magnesium, and the like. Examples of the atomic group constituting a salt of the acid group include tetrabutylammonium and the like.

Moreover, in the polymer (A1), the acid group or the salt thereof may be included in either or both the main chain and the side chain and is preferably included in at least the side chain.

The polymer (A1) is preferably the polymer (A1) having a carboxylic acid group or a salt thereof and/or a sulfonic acid group or a salt thereof, more preferably the polymer (A1) having a sulfonic acid group or a salt thereof, still more preferably the polymer (A1) having a sulfonic acid group or a salt thereof at least in the side chain, and particularly preferably the polymer (A1) having a sulfonic acid group or a salt thereof at least in the side chain in which the content of the sulfonic acid group or the salt thereof is 40% by mol or higher of the total acid groups. In addition, among the sulfonic acid group and the salts thereof, the sulfonic acid group is more preferred.

The polymer (A1) preferably includes a constitutional unit represented by Formula (A1-0) below. The polymer (A1) may have only one constitutional unit represented by Formula (A1-0) below or may have two or more constitutional units.

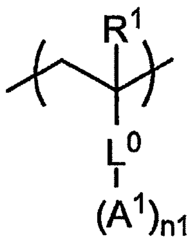

(A1-0)

(In Formula (A1-0), $R^1$ represents a hydrogen atom or a methyl group, $L^0$ represents a linking group, $A^1$ represents at least one selected from a carboxylic acid group and a salt thereof, a sulfonic acid group and a salt thereof, an imidic acid group and a salt thereof, and a methide acid group and a salt thereof, and n1 represents an integer of 1 or higher.)

In Formula (A1-0), examples of $L^0$ include a hydrocarbon group, an aromatic heterocyclic group, -O-, -S-, -CO-, -COO-, -OCO-, $-SO_2-$, -NX- (X represents a hydrogen atom or an alkyl group and is preferably a hydrogen atom) or a group formed of a combination thereof.

Examples of the hydrocarbon group include linear, branched, or cyclic aliphatic hydrocarbon groups or aromatic hydrocarbon groups. The hydrocarbon group may have a substituent, but is preferably not substituted. The number of carbon atoms in the hydrocarbon group is preferably in a range of 1 to 30, more preferably in a range of 1 to 15, and still more preferably in a range of 1 to 10.

The aromatic heterocyclic group is preferably a 5-membered ring or a 6-membered ring. In addition, the aromatic heterocyclic group may be a monocyclic ring or a fused ring.

In Formula (A1-0), $A^1$ is preferably at least one selected from a carboxylic acid group, a sulfonic acid group or a salt thereof, an imidic acid group, and a methide acid group. In addition, $A^1$ is also preferably at least one selected from a carboxylic acid group or a salt thereof and a sulfonic acid group or a salt thereof.

In Formula (A1-0), n1 represents an integer of 1 or higher, is preferably an integer from 1 to 5, and more preferably an integer of 1 or 2. In a case in which n1 represents an integer of 2 or higher, only one $A^1$ may be used, or two or more $A^1$'s may be used.

As a preferred example, the polymer (A1) preferably has a carbon-carbon bond in the main chain and more preferably has a constitutional unit represented by Formula (A1-1) below. The constitutional unit represented by Formula (A1-1) is preferably a constitutional unit represented by Formula (A1-2) below, more preferably a constitutional unit represented by Formula (A1-3) below, and still more preferably a constitutional unit represented by Formula (A1-4) below.

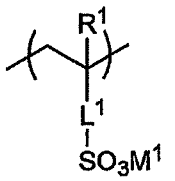

(A1-1)

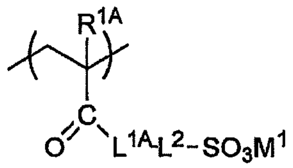

(A1-2)

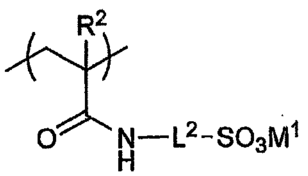

(A1-3)

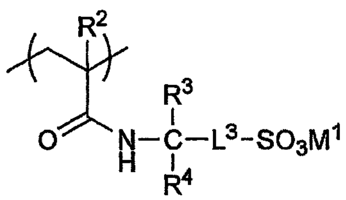

(A1-4)

(In Formulae (A1-1) to (A1-4), each of $R^1$, $R^{1A}$, and $R^2$ independently represents a hydrogen atom or a methyl group, $L^1$ represents a single bond or a divalent linking group, and each of $L^{1A}$, $L^2$, and $L^3$ independently represents a divalent linking group, $M^1$ represents a hydrogen atom, or an atom or an atomic group constituting a salt with a sulfonic acid group. In Formula (A1-4), each of $R^3$ and $R^4$ independently represent a hydrogen atom or an alkyl group.)

In Formulae (A1-1) to (A1-4), each of $R^1$, $R^{1A}$, and $R^2$ is preferably a hydrogen atom.

In Formula (A1-1), $L^1$ represents a single bond or a divalent linking group. In Formulae (A1-2) to (A1-4), each of $L^{1A}$, $L^2$, and $L^3$ independently represents a divalent linking group. The divalent linking group is not particularly limited, and examples thereof include a divalent hydrocarbon group, a heteroarylene group, -O-, -S-, -CO-, -COO-, -OCO-, $-SO_2-$, -NX- (X represents a hydrogen atom or an alkyl group and is preferably a hydrogen atom), or a group formed of a combination thereof.

Examples of the divalent hydrocarbon group include linear, branched, or cyclic alkylene groups and arylene groups. The hydrocarbon group may have a substituent, but is preferably not substituted.

The linear alkylene group is preferably an alkylene group having 1 to 30 carbon atoms, more preferably an alkylene group having 1 to 15 carbon atoms, and still more preferably an alkylene group having 1 to 6 carbon atoms. In addition, the branched alkylene group is preferably an alkylene group having 3 to 30 carbon atoms, more preferably an alkylene group having 3 to 15 carbon atoms, and still more preferably an alkylene group having 3 to 6 carbon atoms.

The cyclic alkylene group may be either a monocyclic ring or a polycyclic ring. The cyclic alkylene group is preferably a cycloalkylene group having 3 to 20 carbon atoms, more preferably a cycloalkylene group having 6 to 10 carbon atoms, and still more preferably a cycloalkylene group having 4 to 10 carbon atoms.

The arylene group is preferably an arylene group having 6 to 18 carbon atoms, more preferably an arylene group having 6 to 14 carbon atoms, and still more preferably an arylene group having 6 to 10 carbon atoms, and a phenylene group is particularly preferred.

The heteroarylene group is not particularly limited, but is preferably a 5-membered or 6-membered ring. In addition, the heteroarylene group may be a monocyclic ring or a fused ring, is preferably a monocyclic ring or a fused ring having 2 to 8 fusions and more preferably a monocyclic ring or a fused ring having 2 to 4 fusions.

In Formula (A1-2), $L^{1A}$ preferably represents, among divalent linking groups, -O-, -S-, -CO-, -COO-, -OCO-, $-SO_2-$, -NX- (X represents a hydrogen atom or an alkyl group and is preferably a hydrogen atom), or a group formed of a combination thereof, and -O- or NH- is preferred. In addition, in Formulae (A1-2) to (A1-4), each of $L^2$ and $L^3$ is, independently, preferably a divalent hydrocarbon group.

$L^3$ is, particularly, preferably a linear alkylene group having 1 to 3 carbon atoms and more preferably an ethylene group.

In Formula (A1-4), the alkyl group represented by $R^3$ or $R^4$ is preferably a linear or branched alkyl group having 1 to 10 carbon atoms, more preferably a linear alkyl group having 1 to 3 carbon atoms, and still more preferably a methyl group. Both $R^3$ and $R^4$ particularly preferably represent methyl groups.

In Formulae (A1-1) to (A1-4), an atom or an atomic group constituting a salt with a sulfonic acid group which is represented by $M^1$ is identical to the atom or atomic group constituting a salt of the above-described acid group, and is preferably a hydrogen atom or an alkali metal atom.

In addition, the polymer (A1) also preferably includes a constitutional unit represented by Formula (A1-11) below. The constitutional unit represented by Formula (A1-11) is preferably a constitutional unit represented by Formula (A1-12) below, more preferably a constitutional unit represented by Formula (A1-13) below, and still more preferably a constitutional unit represented by Formula (A1-14) below.

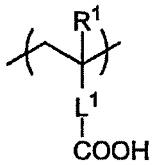 (A 1 − 1 1) 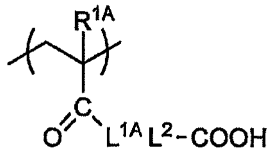 (A 1 − 1 2)

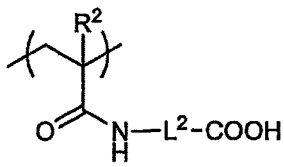 (A 1 − 1 3) 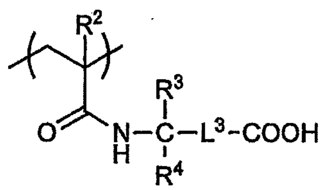 (A 1 − 1 4)

In Formula (A1-11), $R^1$ and $L^1$ are identical to $R^1$ and $L^1$ in Formula (A1-1), and the preferred ranges thereof are also identical.

In Formula (A1-12), $R^{1A}$, $L^{1A}$, and $L^2$ are identical to $R^{1A}$, $L^{1A}$, and $L^2$ in Formula (A1-2), and the preferred ranges thereof are also identical.

In Formula (A1-13), $R^2$ and $L^2$ are identical to $R^2$ and $L^2$ in Formula (A1-3), and the preferred ranges thereof are also identical.

In Formula (A1-14), $R^2$ to $R^4$, and $L^3$ are identical to $R^2$ to $R^4$, and $L^3$ in Formula (A1-4), and the preferred ranges thereof are also identical.

The polymer (A1) may include other constitutional units in addition to the constitutional unit represented by any one of Formulae (A1-1) to (A1-4) and Formulae (A1-11) to (Al-14).

Regarding a component constituting other constitutional units, the description of the copolymer component

disclosed in Paragraphs "0068" to "0075" ("0112" to "0118" in the specification of the corresponding US2011/0124824A) of JP2010-106268A can be referred to, and the content thereof is incorporated into the present specification.

Examples of preferred other constitutional units include constitutional units represented by Formula (A1-5) below.

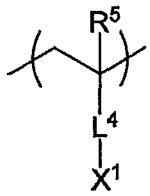

(A1-5)

In Formula (A1-5), $R^5$ represents a hydrogen atom or a methyl group and is preferably a hydrogen atom.

$L^4$ represents a single bond or a divalent linking group, and the divalent linking group is identical to the divalent linking group $L^1$ in Formula (A1-1) above. Particularly, $L^4$ is preferably -COO-, -CO-, -NH-, a linear or branched alkylene group, a group formed of a combination thereof, or a single bond.

In Formula (A1-5), $X^1$ represents $-PO_3H-$, $-PO_3H_2$, -OH, $-R^6$ ($R^6$ represents an alkyl group having 1 to 10 carbon atoms and is preferably an alkyl group having 1 to 8 carbon atoms), or COOH, and is preferably -COOH, -OH, or $R^6$.

In a case in which the polymer (A1) includes other constitutional units (preferably the constitutional unit represented by Formula (A1-5)), the molar ratio between the constitutional unit represented by any one of Formulae (A1-1) to (A1-4) and Formulae (A1-11) to (A1-14) (particularly, the constitutional unit represented by any one of Formulae (A1-1) to (A1-4)) and other constitutional units is preferably in a range of 95:5 to 20:80 and more preferably in a range of 90:10 to 40:60.

The weight-average molecular weight of the polymer (A1) used in the present invention is preferably 2000 or higher, more preferably in a range of 2000 to 2,000000, and still more preferably in a range of 6000 to 200,000. When the weight-average molecular weight of the polymer (A1) used in the present invention is set in the above-described range, there is a tendency that the moisture resistance of the obtained cured film further improves.

The acid value derived from the acid group or the salt thereof (the acid value derived from the acid group or the salt thereof other than the acid structure represented by Formula (1)) of the polymer (A1) is 2 meq/g or higher and more preferably in a range of 3 meq/g to 10 meq/g.

In the polymer (A1) used in the first near-infrared-absorbing composition of the present invention, the acid value based on the acid (specifically, a phosphoric acid group or a phosphonic acid group ($-P(=O)(OH)_2$)) structure represented by Formula (1) is preferably 3.5 meq/g or lower and more preferably 1.0 meq/g or lower. The polymer still more preferably does not substantially include any acid, and particularly preferably has an acid value of 0 meq/g. When the above-described constitution is provided, it becomes possible to further improve the heat resistance of the obtained cured film.

Particularly, the polymer (A1) preferably does not have an acid structure in which the acid group represented by Formula (1) is a phosphonic acid group ($-P(=O)(OH)_2$)), R is represented by $[CH_2=CR^A-C(=O)-N]_{3-n}$, and n is two. Here, $R^A$ represents a hydrogen atom or a methyl group.

In addition, a second near-infrared-absorbing composition of the present invention includes a compound obtained from a reaction between the polymer (A1) containing an acid group or a salt thereof and a copper component and a copper complex obtained from a reaction between a low-molecular-weight compound (preferably a low-molecular-weight compound having an acid group or a salt thereof) having a coordination site and a copper component. In the polymer (A1) used in the second near-infrared-absorbing composition of the present invention, the acid value based on a phosphoric acid group or phosphonic acid group ($-P(=O)(OH)_2$)) structure may be 3.5 meq/g or lower.

Specific examples of the polymer (A1) used in the present invention include compounds shown in the following tables and salts of the following compounds, but are not limited thereto.

[Table 1]

| | | | |
|---|---|---|---|
| P-1 | 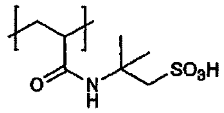 Mw=100,000 | P-9 | 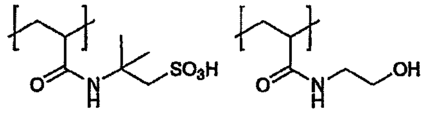 Mw=30,000 |

(continued)

| | | | |
|---|---|---|---|
| P-2 | 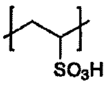 Mw=10,000 | P-10 | 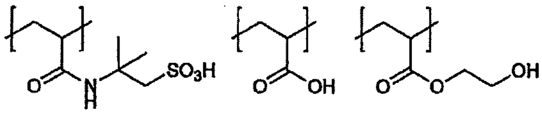 Mw=30,000 |
| P-3 | 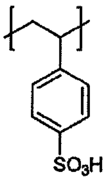 Mw=30,000 | P-11 | 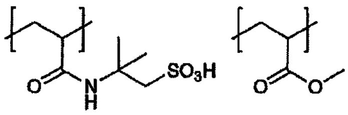 Mw=30,000 |
| P-4 | 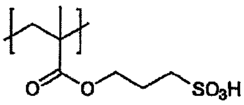 Mw=20,000 | P-12 | 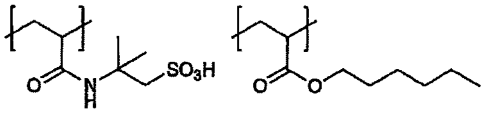 Mw=30,000 |
| P-5 | 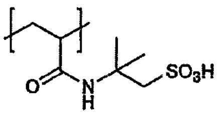 Mw=5,000 | P-13 | 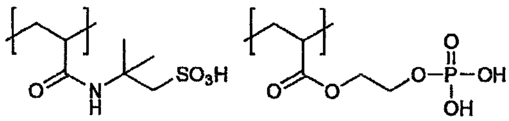 Mw=30,000 |
| P-6 | 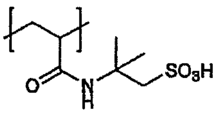 Mw=20,000 | P-14 | 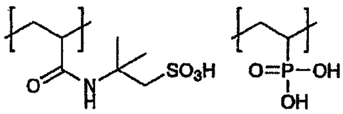 Mw=30,000 |
| P-7 | 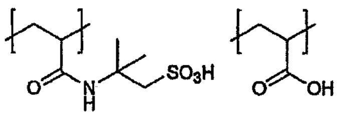 Mw=100,000 | P-15 | 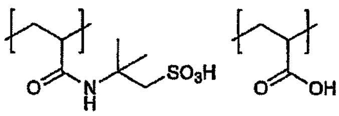 Mw=20,000 |
| P-8 | 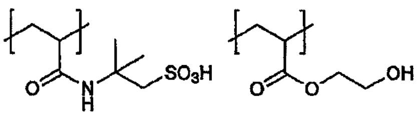 Mw=30,000 | | |

[Table 2]

| | | | |
|---|---|---|---|
| P-16 | 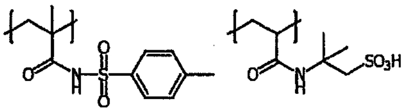 Mw=30,000 | P-20 | 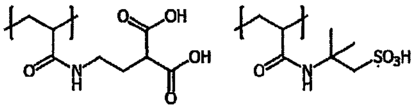 Mw=30,000 |
| P-17 | 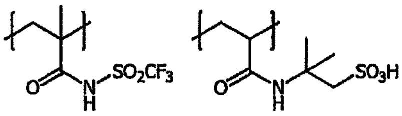 | P-21 | 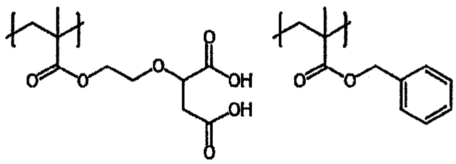 |

(continued)

| | | | |
|---|---|---|---|
| | Mw=30,000 | | Mw=20,000 |
| P-18 | 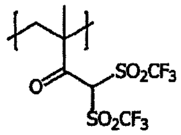 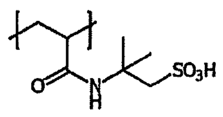 Mw=30,000 | P-22 | 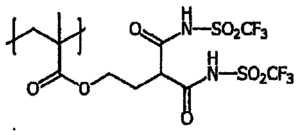 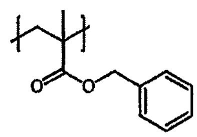 Mw=20,000 |
| P-19 | 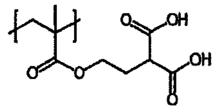 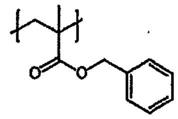 Mw=20,000 | | |

The polymer (A1) can be obtained by causing a polymerization reaction of monomers constituting the above-described constitutional unit. The polymerization reaction can be caused using a well-known polymerization initiator. As the polymerization initiator, an azo polymerization initiator can be used, and specific examples thereof include a water-soluble azo polymerization initiator, an oil-soluble azo polymerization initiator, and a high-molecular-weight polymerization initiator. Only one polymerization initiator may be used, or two or more polymerization initiators may be jointly used.

Examples of the water-soluble azo polymerization initiator include VA-044, VA-046B, V-50, VA-057, VA-061, VA-067, and VA-086 (trade names: all manufactured by Wako Pure Chemical Industries, Ltd.) which are commercially available products. Examples of the oil-soluble azo polymerization initiator include V-60, V-70, V-65, V-601, V-59, V-40, VF-096, and VAm-110 (trade names: all manufactured by Wako Pure Chemical Industries, Ltd.) which are commercially available products. Examples of the high-molecular-weight polymerization initiator include VPS-1001 and VPE-0201 (trade names: both manufactured by Wako Pure Chemical Industries, Ltd.) which are commercially available products.

In the composition of the present invention, the content of the compound obtained from the reaction between the polymer (A1) and the copper component is preferably 40% by mass or higher of the total solid content, more preferably 50% by mass or higher, still more preferably 70% by mass or higher, and far still more preferably 80% by mass or higher. In addition, in the composition of the present invention, the content of the compound obtained from the reaction between the polymer (A1) and the copper component is preferably 40% by mass or higher of the total solid content, more preferably 50% by mass or higher, still more preferably in a range of 70% by mass to 100% by mass, and far still more preferably in a range of 80% by mass to 100% by mass.

In addition, in a case in which the near-infrared-absorbing composition of the present invention includes the compound obtained from the reaction between the polymer (A1) and the copper component and the copper complex obtained from the reaction between the low-molecular-weight compound having a coordination site described below (preferably a low-molecular-weight compound having an acid group or a salt thereof) and the copper component, the content of the compound obtained from the reaction between the polymer (A1) and the copper component is preferably 10% by mass or higher of the total solid content in the composition, more preferably 15% by mass or higher, preferably in a range of 10% by mass to 90% by mass, more preferably in a range of 15% by mass to 80% by mass, still more preferably in a range of 15% by mass to 70% by mass, and far still more preferably in a range of 20% by mass to 70% by mass.

The near-infrared-absorbing composition of the present invention needs to include the compound obtained from the reaction between the polymer (A1) and the copper component and, as necessary, may include a copper compound other than the above-described copper component, a solvent, a curable compound, a binder polymer, a surfactant, a polymerization initiator, and other components.

In addition, the near-infrared-absorbing composition of the present invention may include a compound having an acid group or a salt thereof which is used to obtain a near-infrared-absorbing compound described below.

<Near-infrared-absorbing compound>

For the purpose of further improving the near-infrared-absorbing function, a near-infrared-absorbing compound other than the compound obtained from the reaction between the polymer (A1) and the copper component may be formulated into the composition of the present invention. The near-infrared-absorbing compound used in the present invention is not particularly limited as long as the near-infrared-absorbing compound has a maximum absorption wavelength generally in a range of 700 nm to 2500 nm and preferably in a range of 700 nm to 1000 nm (near-infrared-ray range).

The near-infrared-absorbing compound is preferably a copper compound and more preferably a copper complex.

In a case in which the near-infrared-absorbing compound is formulated into the composition, the ratio (mass ratio) between the compound obtained from the reaction between the polymer (A1) and the copper component and the near-infrared-absorbing compound is preferably set in a range of 10:90 to 95:5, more preferably set in a range of 20:80 to 90:10, and still more preferably set in a range of 20:80 to 80:20.

In a case in which the near-infrared-absorbing compound is a copper complex, a ligand L coordinating copper is not particularly limited as long as the ligand is capable of forming a coordination bond with a copper ion, and examples thereof include sulfonic acid, carboxylic acid, and compounds having carbonyl (ester, ketone), an amine, an amide, a sulfonamide, urethane, urea, an alcohol, or a thiol. Among these, carboxylic acid and sulfonic acid are preferred, and sulfonic acid is more preferred.

Examples of the copper complex include a copper complex represented by Formula (A).

$$Cu(L)_{n1} \cdot (X)_{n2} \text{ Formula} \qquad (A)$$

In Formula (A), L represents a ligand coordinating copper, X is not present or represents a halogen atom, $H_2O$, $NO_3$, $ClO_4$, $SO_4$, CN, SCN, $BF_4$, $PF_6$, $BPh_4$ (Ph represents a phenyl group), or an alcohol. Each of n1 and n2 independently represents an integer from 1 to 4.

The ligand L has a substituent including C, N, O, and S as an atom capable of coordinating copper and more preferably has a group having a lone electron pair such as N, O, or S. The number of kinds of the group capable of coordinating copper in the molecule is not limited to one and may be two or more, and the group may or may not be dissociated. In a case in which the group is dissociated, X is not present.

The copper complex is a copper compound in which a copper central metal is coordinated with a ligand, and copper is generally divalent copper. The copper complex can be obtained by, for example, mixing and reacting a compound or a salt thereof which serves as the ligand with the copper component.

The compound or the salt thereof which serves as the ligand is not particularly limited, and examples thereof preferably include an organic acid compound (for example, a sulfonic acid compound, a carboxylic acid compound, or a phosphoric acid compound) or salts thereof.

The compound (low-molecular-weight compound) or the salt thereof which serves as the ligand is preferably a compound having a coordination site and is preferably represented by General Formula (i) below:

$$R^1\!\left(X^1\right)_{n3} \quad \text{General Formula (i)}$$

(In General Formula (i), $X^1$ represents a coordination site, n3 represents an integer from 1 to 6, and $R^1$ represents a single bond or an n-valent group.)

In General Formula (i), $X^1$ is preferably a coordination site coordinated with an anion or a coordination site coordinated with an unshared electron pair. Any anion may be used as long as the anion is capable of coordinating a copper atom in the copper component, and an oxygen anion, a nitrogen anion, or a sulfur anion is preferred.

The coordination site coordinated with an anion is preferably at least one selected from the following group (AN)

Group (AN)

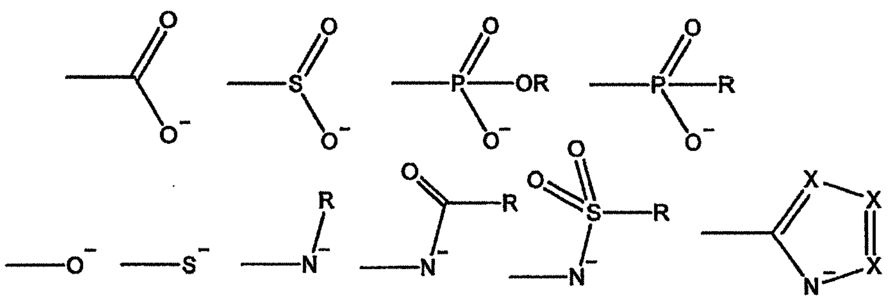

In the group (AN), X represents N or CR, and each of R's independently represents a hydrogen atom, an alkyl group, an alkenyl group, an alkynyl group, an aryl group, or a heteroaryl group.

The alkyl group may have a linear shape, a branched shape, or a cyclic shape, and preferably has a linear shape. The number of carbon atoms in the alkyl group is preferably in a range of 1 to 10, more preferably in a range of

1 to 6, and still more preferably in a range of 1 to 4. Examples of the alkyl group include a methyl group. The alkyl group may have a substituent, and examples of the substituent include a halogen atom, a carboxyl group, and a heterocyclic group. The heterocyclic group as the substituent may be a monocyclic ring or a polycyclic ring and may be an aromatic group or a non-aromatic group. The number of hetero atoms constituting a heterocycle is preferably in a range of 1 to 3 and preferably 1 or 2. The hetero atom constituting the heterocycle is preferably a nitrogen atom. In a case in which the alkyl group has a substituent, the alkyl group may another substituent.

The number of carbon atoms in the alkenyl group is preferably in a range of 1 to 10 and more preferably in a range of 1 to 6.

The number of carbon atoms in the alkynyl group is preferably in a range of 1 to 10 and more preferably in a range of 1 to 6.

The aryl group may be a monocyclic ring or a polycyclic ring and is preferably a monocyclic ring. The number of carbon atoms in the aryl group is preferably in a range of 6 to 18, more preferably in a range of 6 to 12, and still more preferably 6.

The heteroaryl group may be a monocyclic ring or a polycyclic ring. The number of hetero atoms constituting the heteroaryl group is preferably in a range of 1 to 3. The hetero atom constituting the heteroaryl group is preferably a nitrogen atom, a sulfur atom, or an oxygen atom. The number of carbon atoms in the heteroaryl group is preferably in a range of 6 to 18 and more preferably in a range of 6 to 12.

Examples of the coordination site coordinated with an anion also include a monoanionic coordination site. The monoanionic coordination site represents a site at which a coordination bond is formed with a copper atom through a functional group having one negative charge. Examples thereof include an acid group (a phosphate diester group, a phosphonate monoester group, or a phosphinic acid group) having a phosphorus atom, a sulfo group, a carboxyl group, and a hydroxyl group.

The coordination site coordinated with an unshared electron pair preferably includes, as a coordinating atom coordinated with an unshared electron pair, an oxygen atom, a nitrogen atom, a sulfur atom, or a phosphorus atom, more preferably includes an oxygen atom, a nitrogen atom, or a sulfur atom, and still more preferably includes a nitrogen atom.

The coordination site coordinated with an unshared electron pair is preferably a ring having a coordinating atom coordinated with an unshared electron pair or a partial structure selected from the following group (UE).

The ring having a coordinating atom coordinated with an unshared electron pair may be a monocyclic ring or a polycyclic ring and may be an aromatic ring or a non-aromatic ring.

The ring having a coordinating atom coordinated with an unshared electron pair may have a substituent, and examples of the substituent include an alkyl group, an aryl group, a halogen atom, a silicon atom, an alkoxy group, an acyl group, an alkylthio group, and a carboxyl group. In a case in which the ring having a coordinating atom coordinated with an unshared electron pair has a substituent, the ring may have another substituent.

Group (UE)

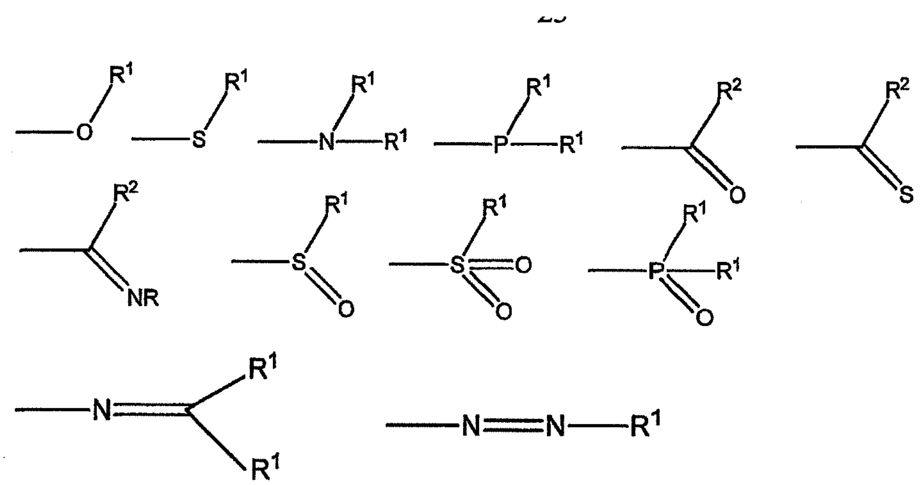

In the group (UE), each of R and $R^1$ independently represents a hydrogen atom, an alkyl group, an alkenyl group, an alkynyl group, an aryl group, or a heteroaryl group, each of $R^2$'s independently represents a hydrogen atom, an alkyl group, an alkenyl group, an alkynyl group, an aryl group, a heteroaryl group, an alkoxy group, an aryloxy group, a heteroaryloxy group, an alkylthio group, an arylthio group, a heteroarylthio group, an amino group, and an acyl group.

The alkyl group represented by R, $R^1$, or $R^2$ in the group (UE) is identical to the alkyl group described in the section of the group (AN), and the preferred range thereof is also identical.

The alkenyl group represented by R, $R^1$, or $R^2$ in the group (UE) is identical to the alkenyl group described in the section of the group (AN), and the preferred range thereof is also identical.

The alkynyl group represented by R, $R^1$, or $R^2$ in the group (UE) is identical to the alkynyl group described in the section of the group (AN), and the preferred range thereof is also identical.

The aryl group represented by R, $R^1$, or $R^2$ in the group (UE) is identical to the aryl group described in the section of the group (AN), and the preferred range thereof is also identical.

The heteroaryl group represented by R, $R^1$, or $R^2$ in the group (UE) is identical to the heteroaryl group described in the section of the group (AN), and the preferred range thereof is also identical.

The number of carbon atoms in the alkoxy group represented by $R^2$ in the group (UE) is preferably in a range of 1 to 12 and more preferably in a range of 3 to 9.

The number of carbon atoms in the aryloxy group represented by $R^2$ in the group (UE) is preferably in a range of 6 to 18 and more preferably in a range of 6 to 12.

The heteroaryloxy group represented by $R^2$ in the group (UE) may be a monocyclic ring or a polycyclic ring. A heteroaryl group constituting the heteroaryloxy group is identical to the heteroaryl group described in the section of the group (AN), and the preferred range thereof is also identical.

The number of carbon atoms in the alkylthio group represented by $R^2$ in the group (UE) is preferably in a range of 1 to 12 and more preferably in a range of 1 to 9.

The number of carbon atoms in the arylthio group represented by $R^2$ in the group (UE) is preferably in a range of 6 to 18 and more preferably in a range of 6 to 12.

The heteroarylthio group represented by $R^2$ in the group (UE) may be a monocyclic ring or a polycyclic ring. A heteroaryl group constituting the heteroarylthio group is identical to the heteroaryl group described in the section of the group (AN), and the preferred range thereof is also identical.

The number of carbon atoms in the acyl group represented by $R^2$ in the group (UE) is preferably in a range of 2 to 12 and more preferably in a range of 2 to 9.

$X^1$ may be an acid group and is preferably at least one of acid groups having a sulfonic acid group, a carboxylic acid group, or a phosphorus atom. Only one $X^1$ may be used, or two or more $X^1$'s are preferably used.

In General Formula (i), n is preferably in a range of 1 to 3, more preferably 2 or 3, and still more preferably 3.

In General Formula (i), the n-valent group is preferably an n-valent organic group or a group formed of a combination of the n-valent organic group and -O-, -SO-, $-SO_2-$, $-NR^{N1}-$, -CO-, or -CS-. Examples of the n-valent organic group include a hydrocarbon group, an oxyalkylene group, and a heterocyclic group. In addition, the n-valent group may be a group having at least one selected from a group (AN-1), a ring having a coordinating atom coordinated with an unshared electron pair, or a group having at least one selected from a group (UE-1).

The hydrocarbon group is preferably an aliphatic hydrocarbon group or an aromatic hydrocarbon group. The hydrocarbon group may have a substituent, and examples of the substituent include an alkyl group, a halogen atom (preferably a fluorine atom), a polymerizable group (for example, a vinyl group, a (meth)acryloyl group, an epoxy group, an oxetane group, or the like), a sulfonic acid group, a carboxylic acid group, an acid group having a phosphorus atom, a carboxylic acid ester group (for example, $-CO_2CH_3$), a hydroxyl group, an alkoxy group (for example, a methoxy group), an amino group, a carbamoyl group, a carbamoyloxy group, a halogenated alkyl group (for example, a fluoroalkyl group or a chloroalkyl group), and a (meth)acryloyloxy group. In a case in which the hydrocarbon group has a substituent, the hydrocarbon group may have another substituent, and examples thereof include an alkyl group, the above-described polymerizable group, and a halogen atom.

In a case in which the hydrocarbon group is monovalent, an alkyl group, an alkenyl group, or an aryl group is preferred, and an aryl group is more preferred. In a case in which the hydrocarbon group is divalent, an alkylene group, an arylene group, or an oxyalkylene group is preferred, and an arylene group is more preferred. In a case in which the hydrocarbon group is trivalent or higher, groups corresponding to the monovalent hydrocarbon group or the divalent hydrocarbon group are preferred.

The alkyl group and the alkylene group may have any of a linear shape, a branched shape, and a ring shape. The number of carbon atoms in the linear alkyl or alkylene group is preferably in a range of 1 to 20, more preferably in a range of 1 to 12, and still more preferably in a range of 1 to 8. The number of carbon atoms in the branched alkyl or alkylene group is preferably in a range of 3 to 20, more preferably in a range of 3 to 12, and still more preferably in a range of 3 to 8. The cyclic alkyl or alkylene group may be either a monocyclic ring or a polycyclic ring. The number of carbon atoms in the cyclic alkyl or alkylene group is preferably in a range of 3 to 20, more preferably in a range of 4 to 10, and still more preferably in a range of 6 to 10.

The number of carbon atoms in the alkenyl group and the alkenylene group is preferably in a range of 2 to 10, more preferably in a range of 2 to 8, and still more preferably in a range of 2 to 4.

The number of carbon atoms in the aryl group or the arylene group is preferably in a range of 6 to 18, more

preferably in a range of 6 to 14, and still more preferably in a range of 6 to 10.

Examples of the heterocyclic group include a group having a hetero atom in an alicyclic group and an aromatic heterocyclic group. The heterocyclic group is preferably a 5-membered ring or a 6-membered ring. In addition, the heterocyclic group is a monocyclic ring or a fused ring, is preferably a monocyclic ring or a fused ring having 2 to 8 fusions, and more preferably a monocyclic ring or a fused ring having 2 to 4 fusions. The heterocyclic group may have a substituent, and the substituent is identical to the substituent that the above-described hydrocarbon group may have.

In $-NR^{N1}-$, $R^{N1}$ represents a hydrogen atom, an alkyl group, an aryl group, or an aralkyl group. The alkyl group as $R^{N1}$ may have any of a linear shape, a branched shape, and a ring shape. The number of carbon atoms in a linear or branched alkyl group is preferably in a range of 1 to 20 and more preferably in a range of 1 to 12. The cyclic alkyl group may be either a monocyclic ring or a polycyclic ring. The number of carbon atoms in the cyclic alkyl group is preferably in a range of 3 to 20 and more preferably in a range of 4 to 14. The number of carbon atoms in the aryl group as $R^{N1}$ is preferably in a range of 6 to 18 and more preferably in a range of 6 to 14. Specific examples thereof include a phenyl group and a naphthyl group. The aralkyl group as $R^{N1}$ is preferably an aralkyl group having 7 to 20 carbon atoms and more preferably an unsubstituted aralkyl group having 7 to 15 carbon atoms.

Group (AN-1)

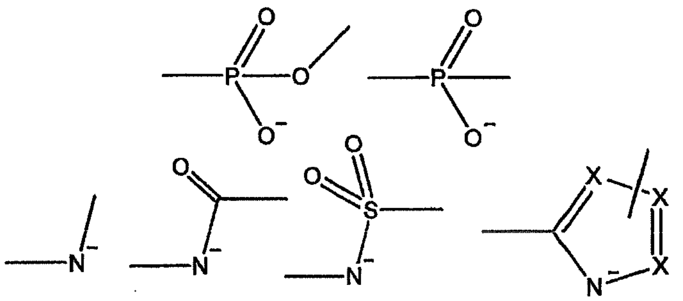

In the group (AN-1), X represents N or CR, and each of R's independently represents a hydrogen atom, an alkyl group, an alkenyl group, an alkynyl group, an aryl group, or a heteroaryl group and is identical to X in the above-described group (AN). The preferred range thereof is also identical.

Group (UE-1)

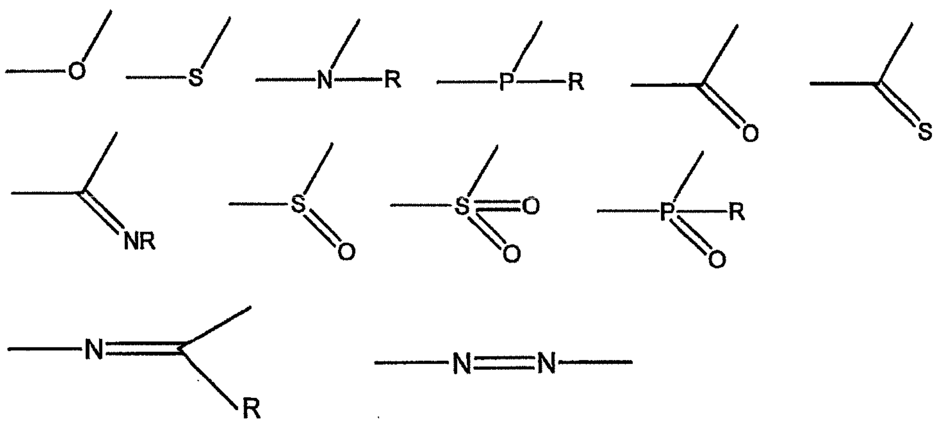

In the group (UE-1), each of R's independently represents a hydrogen atom, an alkyl group, an alkenyl group, an alkynyl group, an aryl group, or a heteroaryl group and is identical to R in the above-described group (UE). The preferred range thereof is also identical.

The molecular weight of the compound (low-molecular-weight compound) or the salt thereof (compound having an acid group or a salt thereof) which serves as the above-described ligand is preferably 1000 or lower, preferably in a range of 80 to 750, and more preferably in a range of 80 to 600.

In a case in which the compound serving as the ligand is a compound having an acid group or a salt thereof, a preferred aspect is (1) a compound having at least one of a sulfonic acid group, a carboxylic acid group, and an acid group having a phosphorus atom, a more preferred aspect is (2) a compound having at least two acid groups, and a

still more preferred aspect is (3) a compound having a sulfonic acid group and a carboxylic acid group. In these aspects, an infrared-absorbing function is more effectively developed. Furthermore, when a compound having a sulfonic acid group and a carboxylic acid group is used, the color value can be further improved.

Specific examples of (1) the compound having at least one of a sulfonic acid group, a carboxylic acid group, and an acid group having a phosphorus atom include the following compounds. In addition, specific examples of the compound having a sulfonic acid group also include the specific examples of a sulfonic acid compound represented by Formula (I) below. In addition, out of the compounds described as aspects (2) and (3) described below, compounds belonging to the present aspect can also be considered as the preferred examples thereof.

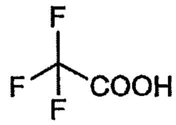
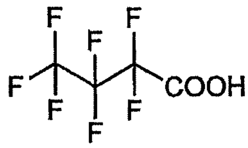
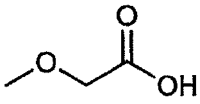
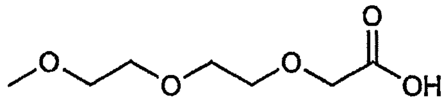
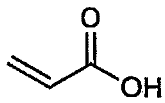
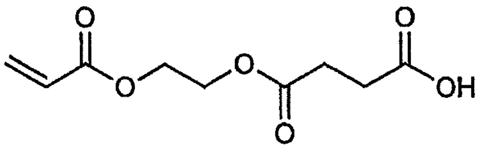

Specific examples of (2) the compound having at least two acid groups include the following compounds. In addition, out of the compounds described as the aspect (3) described below, compounds belonging to the present aspect can also be considered as the preferred examples thereof.

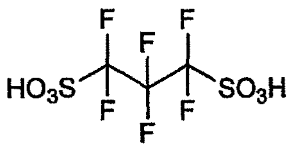
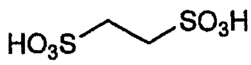
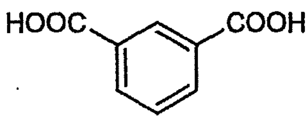
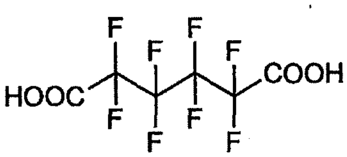
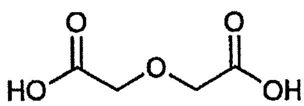
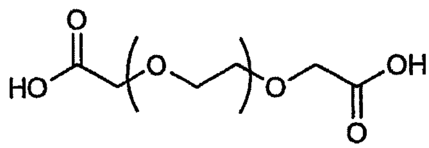
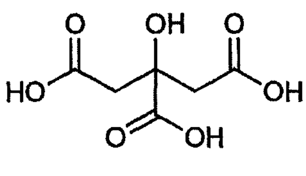

Specific examples of (3) the compound having a sulfonic acid group and a carboxylic acid group include the following compounds. In addition, the specific examples also include specific examples of a compound having a sulfonic acid group and a carboxylic acid group represented by Formula (I) described below.

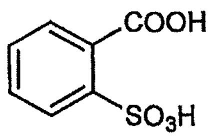

As another copper complex that can be used in the present invention, a sulfonic acid copper complex is also preferred. The sulfonic acid copper complex is a copper complex in which copper is a central metal and a sulfonic acid compound is a ligand. The sulfonic acid compound is preferably a compound represented by General Formula (ii) described below.

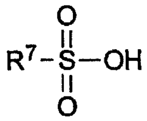

(In Formula (ii), $R^7$ represents a monovalent organic group.)

In Formula (ii), a specific monovalent organic group as $R^7$ is not particularly limited, and a hydrocarbon group can be used as the monovalent organic group as $R^7$. Specific examples thereof include linear, branched, or cyclic alkyl group, alkenyl group, and aryl group. Here, these groups may be groups linked through a divalent linking group (for example, a linear or branched alkylene group, a cyclic alkylene group (a cycloalkylene group), an arylene group, -O-, -S-, -CO-, -COO-, -OCO-, $-SO_2-$, -NR- (R is a hydrogen atom or an alkyl group), or the like).

The number of carbon atoms in the linear alkyl group, the branched alkyl group, the cyclic alkyl group, the alkenyl group, or the aryl group is identical to that described for $R^1$ in General Formula (i) above, and the preferred range is also identical.

In addition, the monovalent organic group may have a substituent. Examples of the substituent that the monovalent organic group may have include an alkyl group, a polymerizable group (for example, a vinyl group, a (meth)acryloyl group, an epoxy group, or an oxetane group), a halogen atom, a carboxyl group, a carboxylic acid ester group (for example, $-CO_2CH_3$) hydroxyl group, an amide group, and a halogenated alkyl group (for example, a fluoroalkyl group or a chloroalkyl group).

Examples of a linear or branched alkylene group, a cyclic alkylene group, and an arylene group, which are divalent linking groups, include divalent linking groups derived by removing one hydrogen atom from the above-described linear, branched, or cyclic alkyl group, cycloalkyl group, and aryl group.

The molecular weight of the compound represented by General Formula (ii) or the salt thereof is preferably in a range of 80 to 750, more preferably in a range of 80 to 600, and still more preferably in a range of 80 to 450.

Specific examples of the compound represented by General Formula (ii) will be shown below, but the compound is not limited thereto.

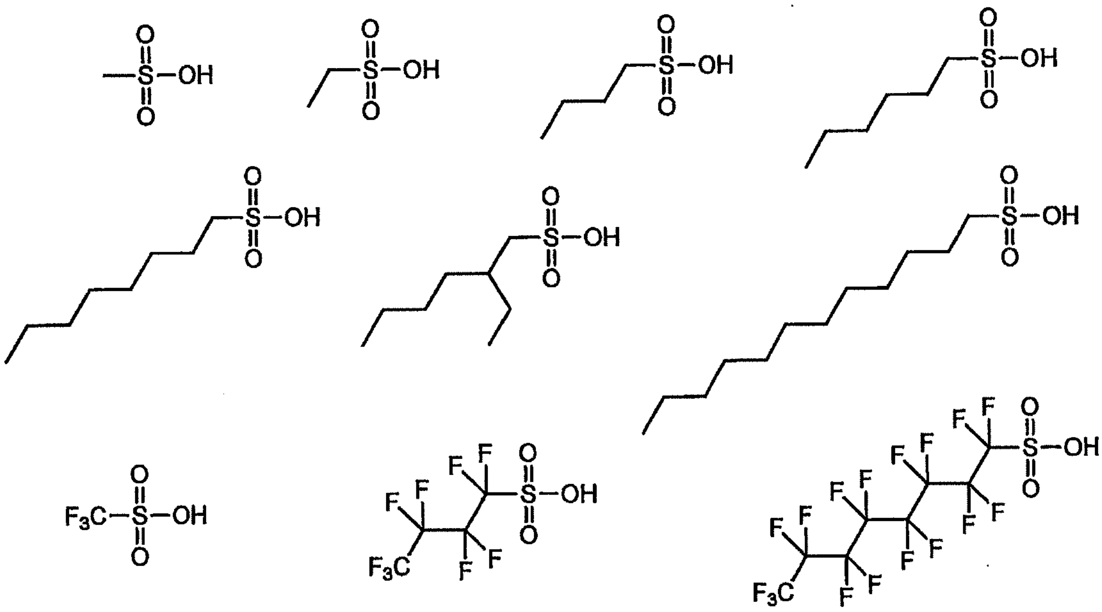

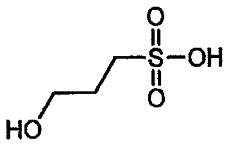

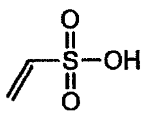

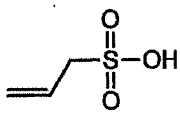

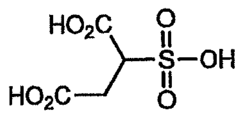

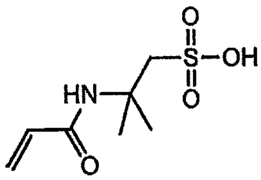

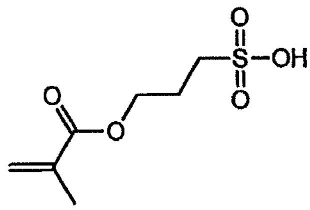

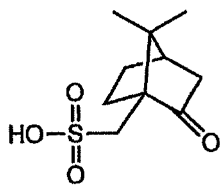

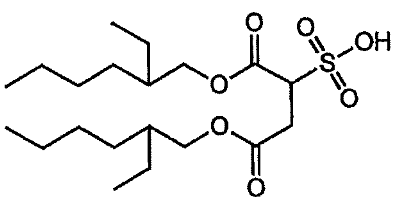

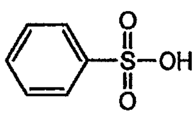

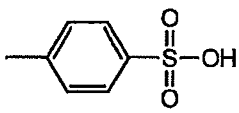

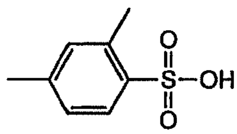

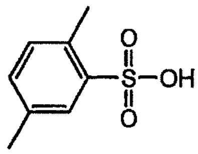

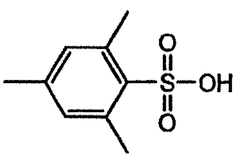

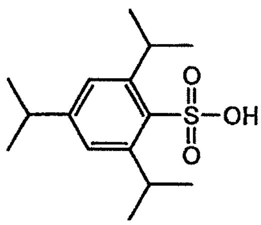

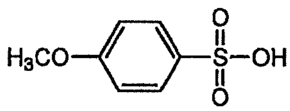

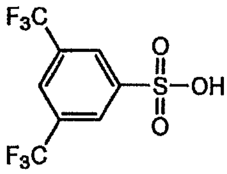 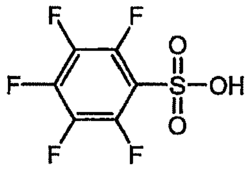 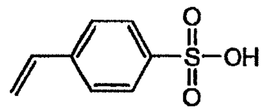

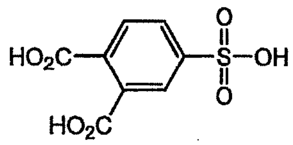 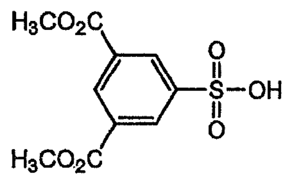

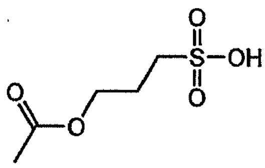 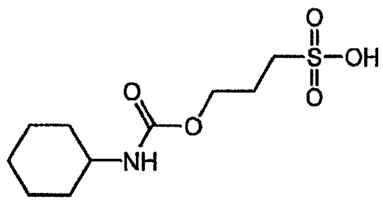

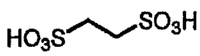 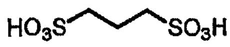

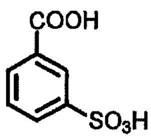 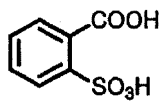 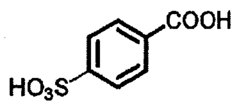

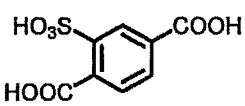 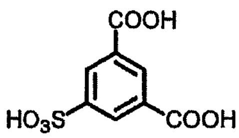

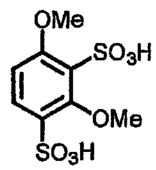 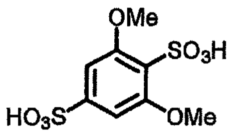 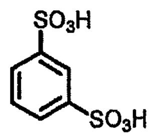 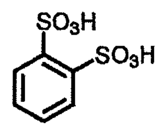 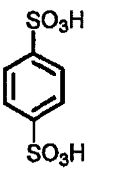

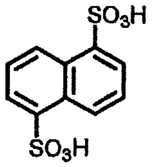 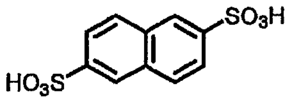 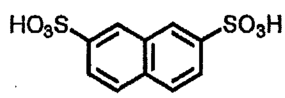 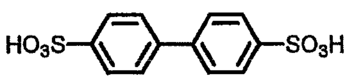

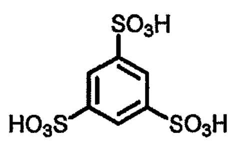

As the sulfonic acid compound that can be used in the present invention, a commercially available sulfonic acid can be used, and it is also possible to synthesize a sulfonic acid compound with reference to a well-known method.

(Inorganic fine particles)

The composition of the present invention may include inorganic fine particles as another near-infrared-absorbing substance. Only one kind of inorganic fine particles may be used or two or more kinds of inorganic fine particles may be used.
The inorganic fine particles refer to particles that play a role of shielding (absorbing) infrared rays. The inorganic fine particles are preferably at least one selected from the group consisting of metal oxide particles and metal particles in terms of more favorable infrared shielding properties.
Examples of the inorganic fine particles include metal oxide particles such as indium tin oxide (ITO) particles, antimony tin oxide (ATO) particles, particles of zinc oxide which may be doped with aluminum (ZnO which may be doped with aluminum), fluorine-doped tin dioxide (F-doped $SnO_2$) particles, and niobium-doped titanium dioxide (Nb-doped $TiO_2$) particles and metal particles such as silver (Ag) particles, gold (Au) particles, copper (Cu) particles, and nickel (Ni) particles. Meanwhile, in order to satisfy both infrared shielding properties and photolithographic properties, inorganic fine particles having a high transmissivity at an exposure wavelength (365 nm to 405 nm) are desired and indium tin oxide (ITO) particles or antimony tin oxide (ATO) particles are preferred.
The shapes of the inorganic fine particles are not particularly limited, may be any of non-spherical and spherical, and may be sheet shapes, wire shapes, or tube shapes.
In addition, as the inorganic fine particles, a tungsten oxide-based compound can be used and, specifically, the inorganic fine particles are more preferably a tungsten oxide-based compound represented by General Formula (Composition Formula) (I) described below.

$$M_xW_yO_z \qquad (I)$$

M represents a metal, W represents tungsten, and O represents oxygen.

$$0.001 \leq x/y \leq 1.1$$

$$2.2 \leq z/y \leq 3.0$$

Examples of the metal M include alkali metals, alkaline earth metals, Mg, Zr, Cr, Mn, Fe, Ru, Co, Rh, Ir, Ni, Pd, Pt, Cu, Ag, Au, Zn, Cd, Al, Ga, In, Tl, Sn, Pb, Ti, Nb, V, Mo, Ta, Re, Be, Hf, Os, and Bi. The metal M is preferably an alkali metal, preferably Rb or Cs, and more preferably Cs. The number of the metals M may be one or more.
When x/y is 0.001 or more, it is possible to sufficiently shield infrared rays and, when x/y is 1.1 or less, it is possible to more reliably avoid the generation of impurity phases in the tungsten oxide-based compound.
When z/y is 2.2 or more, it is possible to further improve chemical stability as a material and, when z/y is 3.0 or less, it is possible to sufficiently shield infrared rays.
The metal oxide is preferably cesium tungsten oxide.
Specific examples of the tungsten oxide-based compound represented by Formula (I) include $Cs_{0.33}WO_3$, $Rb_{0.33}WO_3$, $K_{0.33}WO_3$, $Ba_{0.33}WO_3$, and the like, $Cs_{0.33}WO_3$ or $Rb_{0.33}WO_3$ is preferred, and $Cs_{0.33}WO_3$ is more preferred.
The metal oxide preferably has a fine particle form. The average particle diameter of the metal oxide is preferably 800 nm or less, more preferably 400 nm or less, and still more preferably 200 nm or less. When the average particle diameter is in the above-described range, the metal oxide is not capable of easily shielding visible light through light scattering and thus it is possible to more reliably transmit light in the visible light range. From the viewpoint of avoiding light scattering, the average particle diameter is preferably small; however, in consideration of ease of handling during the production of the metal oxide, the average particle diameter of the metal oxide is generally 1 nm or more.
The tungsten oxide-based compound can be produced in a form of, for example, a dispersion of tungsten fine particles such as YMF-02, YMF-02, YMF-02A, YMS-01A-2, or YMF-10A-1 manufactured by Sumitomo Metal Mining Co., Ltd.
The content of the metal oxide is preferably in a range of 0.01% by mass to 30% by mass, more preferably in a range of 0.1% by mass to 20% by mass, and still more preferably in a range of 1% by mass to 10% by mass in relation to the total solid content mass of the composition including the metal oxide.

<Solvent>

Regarding a solvent used in the present invention, there is no particular limitation, any solvent can be appropriately selected depending on the purpose as long as the solvent is capable of uniformly dissolving or dispersing the respective components of the composition of the present invention, and preferred examples thereof include an aqueous solvent such as water. In addition, additional preferred examples of the solvent used in the present invention include organic solvents such as alcohols, ketones, ethers, esters, aromatic hydrocarbons, halogenated hydrocarbons, dimethylformamide, dimethylacetamide, dimethylsulfoxide, sulfolane, and the like. Only one solvent may be used, or two or more solvents may be jointly used.
Specific examples of the alcohols, the aromatic hydrocarbons, and the halogenated hydrocarbons include those described in Paragraph "0136" and the like in JP2012-194534A and the content thereof is incorporated into the specification of the present application. In addition, specific examples of the esters, the ketones, and the ethers include those described in Paragraph "0497" in JP2012-208494A (Paragraph "0609" in the corresponding US2012/0235099A) and further include n-amyl acetate, ethyl propionate, dimethyl phthalate, ethyl benzoate, methyl sulfate, acetone, and methyl isobutyl ketone, 1-methoxy-2-propanol.
The content of the solvent is preferably 10% by mass or higher, more preferably 20% by mass or higher, still more preferably 30% by mass or higher, and far still more preferably 40% by mass or higher of the composition of the present invention.
The composition of the present invention particularly preferably includes water as the solvent. The content of water is preferably in a range of 40% by mass to 95% by mass and more preferably in a range of 50% by mass to 85% by mass of the composition of the present invention.
In a case in which the composition of the present invention includes a solvent other than water (for example, an organic solvent), the content of the solvent is preferably in a range of 1% by mass to 50% by mass and more preferably in a range of 5% by mass to 30% by mass of the composition of the present invention. Only one solvent other than water may be used, or two or more solvents may be used.

<Curable compound>

The composition of the present invention may further include a curable compound. The curable compound may be a polymerizing compound or a non-polymerizing compound such as a binder. In addition, the curable compound may be a thermosetting compound or a photocrosslinkable compound and is preferably a thermosetting composition due to its high reaction rate.

«Compound having polymerizable group»

The composition of the present invention may include a compound having a polymerizable group (hereinafter, in some cases, referred to as "polymerizing compound"). A group of such compounds is widely known in the corresponding industrial field and, in the present invention, these compounds can be used without any particular limitation. The compounds may have any chemical form of, for example, a monomer, an oligomer, a prepolymer, a polymer, and the like.

«Polymerizing monomer and polymerizing oligomer»

The composition of the present invention may include a monomer having a polymerizable group (polymerizing monomer) or an oligomer having a polymerizable group (polymerizing oligomer) (hereinafter, in some cases, the polymerizing monomer and the polymerizing oligomer will be collectively referred to as "the polymerizing monomer and the like") as the polymerizing compound.
Examples of the polymerizing monomer and the like include unsaturated carboxylic acids (for example, acrylic acid, methacrylic acid, itaconic acid, crotonic acid, isocrotonic acid, maleic acid, and the like), esters thereof, and amides thereof and esters of an unsaturated carboxylic acid and an aliphatic polyvalent alcohol compound and amides of an unsaturated carboxylic acid and an aliphatic polyvalent amine compound are preferred. In addition, addition reactants of an unsaturated carboxylic acid ester or amide having a nucleophilic substituent such as a hydroxyl group, an amino group, or a mercapto group and a monofunctional or polyfunctional isocyanate or epoxy, dehydration and condensation reactants of an unsaturated carboxylic acid ester or amide and a monofunctional or polyfunctional carboxylic acid, and the like are also preferably used. In addition, addition reactants of an unsaturated carboxyl ester or an amide having an electrophilic substituent such as an isocyanate group or an epoxy group and a monofunctional or polyfunctional alcohol, amine, or thiol and, furthermore, substitution reactants of an unsaturated carboxylic acid ester or amide having a desorbable substituent such as a halogen group or a tosyloxy group and a monofunctional or polyfunctional alcohol, amine, or thiol are also preferred. As additional examples, it is also possible to use a group of compounds substituted with an

unsaturated phosphonic acid, a vinyl benzene derivative such as styrene, a vinyl ether, an aryl ether, or the like instead of the above-described unsaturated carboxylic acid.

As the specific compounds thereof, the compounds described in Paragraphs "0095" to "0108" in JP2009-288705A can be preferably used even in the present invention.

In addition, as the polymerizing monomer and the like, it is possible to use a compound having an ethylenic unsaturated group which has at least one addition-polymerizing ethylene group and a boiling point of 100°C or higher at normal pressure, and it is also possible to use a monofunctional (meth)acrylate, a difunctional (meth)acrylate, and a tri- or higher-functional (meth)acrylate (for example, tri- to hexafunctional (meth)acrylate).

Examples thereof include monofunctional acrylates or methacrylates such as polyethylenene glycol mono(meth)acrylate, polypropylene glycol mono(meth)acrylate, and phenoxyethyl (meth)acrylate; and substances obtained by adding ethylene oxide or propylene oxide to a polyfunctional alcohol such as polyethylene glycol di(meth)acrylate, trimethylolethane tri(meth)acrylate, neopentyl glycol di(meth)acrylate, pentaerythritol tri(meth)acrylate, pentaerythritol tetra(meth)acrylate, dipentaerythritol penta(meth)acrylate, dipentaerythritol hexa(meth)acrylate, hexanediol (meth)acrylate, trimethylolpropane tri(acryloyloxypropyl) ether, tri(acryloyloxyethyl) isocyanurate, glycerin, or trimethylolethane and then (meth)acrylating the mixture.

The polymerizing compound is preferably ethyleneoxy-denatured pentaerythritol tetraacrylate (NK ester ATM-35E as a commercially available product: manufactured by Shin-Nakamura Chemical Co., Ltd.), dipentaerythritol triacrylate (KAYARAD D-330 as a commercially available product; manufactured by Nippon Kayaku Co., Ltd.), dipentaerythritol tetraacrylate (KAYARAD D-320 as a commercially available product; manufactured by Nippon Kayaku Co., Ltd.), dipentaerythritol penta(meth)acrylate (KAYARAD D-310 as a commercially available product; manufactured by Nippon Kayaku Co., Ltd.), dipentaerythritol hexa(meth)acrylate (KAYARAD DPHA as a commercially available product; manufactured by Nippon Kayaku Co., Ltd.), and structures in which the above-described (meth)acryloyl groups are bonded to each other through ethylene glycol and propylene glycol residues. In addition, the oligomer types thereof can also be used. It is also possible to use the compounds described in Paragraphs "0248" to "0251" in JP2007-269779A in the present invention.

Examples of the polymerizing monomer and the like include the polymerizing monomer and the like described in Paragraph "0477" in JP2012-208494A (Paragraph "0585" in the corresponding US2012/0235099A) and the content thereof is incorporated into the specification of the present application. In addition, DIGLYCERIN EO (ethylene oxide)-denatured (meth)acrylate (M-460 as a commercially available product; manufactured by Toagosei Co., Ltd.) can be used. Pentaerythritol tetraacrylate (manufactured by Shin-Nakamura Chemical Co., Ltd., A-TMMT) and 1,6-hexanediol diacrylate (manufactured by Nippon Kayaku Co., Ltd., KAYARAD HDDA) can also be used. The oligomer types thereof can also be used.

Examples thereof include RP-1040 (manufactured by Nippon Kayaku Co., Ltd.).

In the present invention, as the monomer having an acid group, it is possible to use an ester of an aliphatic polyhydroxy compound and an unsaturated carboxylic acid which is a polyfunctional monomer provided with an acid group by reacting an unreacted hydroxyl group in an aliphatic polyhydroxy compound and a non-aromatic carboxy anhydride. Examples of commercially available products thereof include ARONIX series M-305, M-510, M-520, and the like which are polybasic acid-denatured acryl oligomers manufactured by Toagosei Co., Ltd.

The acid value of the polyfunctional monomer having an acid group is in a range of 0.1 mg-KOH/g to 40 mg-KOH/g and preferably in a range of 5 mg-KOH/g to 30 mg-KOH/g. In a case in which two or more polyfunctional monomers having different acid groups are jointly used or polyfunctional monomers having no acid groups are jointly used, it is essentially required to prepare the polyfunctional monomers so that all the acid values of the polyfunctional monomers fall within the above-described range.

«Polymer having polymerizable group in side chain»

The second aspect of the composition of the present invention may be an aspect in which a polymer having a polymerizable group in a side chain is provided as the polymerizing compound. Examples of the polymerizable group include an ethylenic unsaturated double-bonded group, an epoxy group, and an oxetanyl group.

«Compound having epoxy group or oxetanyl group»

A third aspect of the present invention may be an aspect in which a compound having an epoxy group or an oxetanyl group is included as the polymerizing compound. Examples of the compound having an epoxy group or an oxetanyl group include polymers having an epoxy group in the side chain and polymerizing monomers or oligomers having two or more epoxy groups in the molecule and specific examples thereof include bisphenol A-type epoxy resins, bisphenol F-type epoxy resins, phenol novolac-type epoxy resins, cresol novolac-type epoxy resins, and aliphatic epoxy resins. In addition, examples thereof also include a monofunctional or polyfunctional glycidyl ether compound.

As the above-described compound, a commercially available product may be used or the compound can be obtained by introducing an epoxy group into the side chain in the polymer.

Regarding the commercially available product, for example, the description of Paragraphs "0191" and the like in JP2012-155288A can be referred to and the content thereof is incorporated into the specification of the present application by reference.

Examples of the commercially available product include polyfunctional aliphatic glycidyl ether compounds such as DENACOL EX-212L, EX-214L, EX-216L, EX-321L, and EX-850L (all manufactured by Nagase ChemteX Corporation). The above-described products are low-chlorine products and EX-212, X-214, EX-216, EX-321, EX-850, and the like, which are not low-chlorine products, can also be used in a similar manner.

Additionally, examples thereof include ADEKA RESIN EP-4000S, ADEKA RESIN EP-4003S, ADEKA RESIN EP-4010S, ADEKA RESIN EP-4011S (all manufactured by Adeka Corporation), NC-2000, NC-3000, NC-7300, XD-1000, EPPN-501, EPPN-502 (all manufactured by Adeka Corporation), JER1031S, and the like.

Furthermore, examples of the commercially available product of the phenol novolac-type epoxy resins include JER-157S65, JER-152, JER-154, JER-157S70 (all manufactured by Mitsubishi Chemical Corporation), and the like.

Specific examples of the polymer having an oxetanyl group in the side chain and the above-described polymerizing monomer or oligomer having two or more oxetanyl groups in the molecule that can be used include ARONOXETANE OXT-121, OXT-221, OX-SQ, and PNOX (all manufactured by Toagosei Co., Ltd.).

In a case in which the compound is synthesized by introducing an epoxy group into the side chain of the polymer, an epoxy group can be introduced by causing an introduction reaction in an organic solvent using, for example, a tertiary amine such as triethylamine or benzylmethylamine, a quaternary ammonium salt such as dodecyltrimethylammonium chloride, tetramethylammonium chloride, or tetraethylammonium chloride, pyridine, triphenylphosphine, or the like as a catalyst at a reaction temperature in a range of 50°C to 150°C for several hours to several tens of hours. The amount of an alicyclic epoxy unsaturated compound introduced can be controlled so that the acid value of the obtained polymer falls into a range of 5 KOH·mg/g to 200 KOH·mg/g. In addition, the molecular weight can be set in a range of 500 to 5000000 and furthermore set in a range of 1000 to 500000 in terms of weight average.

As the epoxy unsaturated compound, a compound having a glycidyl group as the epoxy group such as glydicyl (meth)acrylate or allylglycidyl ether can be used. Regarding the above-described compound, for example, the description of Paragraph "0045" of JP2009-265518A can be referred to, and the content thereof is incorporated into the present specification for reference.

The present invention preferably includes a polymer having a crosslinked group such as an unsaturated double bond, an epoxy group, or an oxetanyl group. In that case, it is possible to further improve a film-producing property (suppression of cracking or warping) and moisture resistance when a cured film is produced. Specific examples thereof include polymers having a repeating unit described below. The polymer having the following repeating unit is preferably a polymer having an epoxy group.

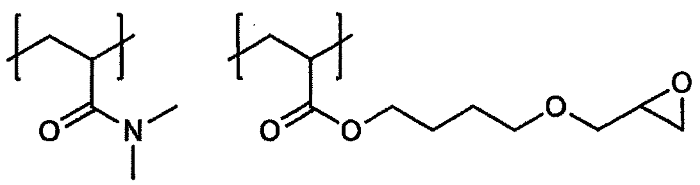

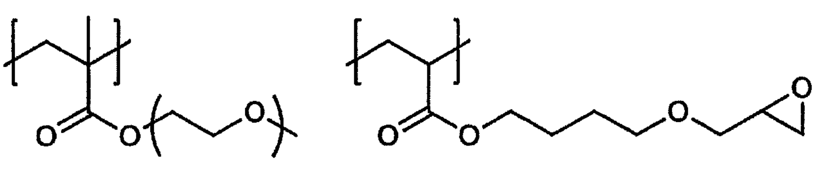

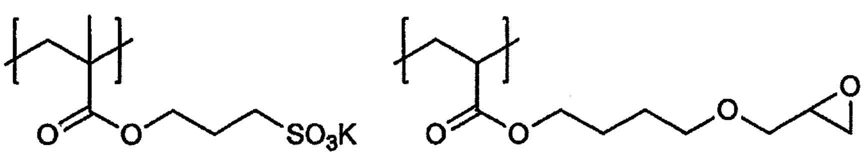

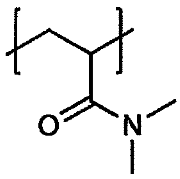

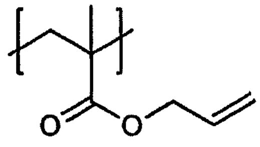

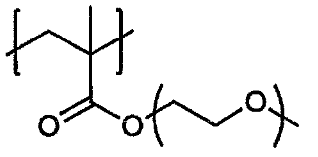

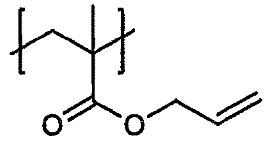

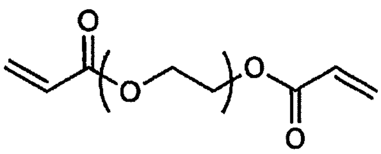

<<Compound having partial structure represented by Formula (1)>>

The curable compound used in the present invention also preferably has a partial structure represented by Formula (1) and the curable compound may have a crosslinked group such as an unsaturated double bond, an epoxy group, or an oxetanyl group.

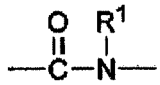 Formula (1)

(In Formula (1), $R^1$ represents a hydrogen atom or an organic group.)

When the above-described compound is included, it is possible to further improve near-infrared shielding properties and further improve moisture resistance when a cured film is produced using the near-infrared-absorbing composition of the present invention.

In Formula (1), $R^1$ represents a hydrogen atom or an organic group. Examples of the organic group include hydrocarbon groups, specifically, alkyl groups and aryl groups, and the organic group is preferably an alkyl group having 1 to 20 carbon atoms, an aryl group having 6 to 20 carbon atoms, or a group obtained by combining the above-described group and a divalent linking group.

Specific examples of the above-described organic group include -OR', -SR', and groups obtained by combining the above-described group and at least one of $-(CH_2)_m-$ (m is an integer from 1 to 10), a cyclic alkylene group having 5 to 10 carbon atoms, -O-, -CO-, -COO-, and -NH-. Here, R' is preferably a hydrogen atom, a linear alkyl group having 1 to 10 carbon atoms, a branched or cyclic alkyl group having 3 to 10 carbon atoms (preferably a linear alkyl group having 1 to 7 carbon atoms or a branched or cyclic alkyl group having 3 to 7 carbon atoms), an aryl group having 6 to 10 carbon atoms, or a group obtained by combining an aryl group having 6 to 10 carbon atoms and an alkylene group having 1 to 10 carbon atoms.

In addition, in Formula (1), $R^1$ and C may be bonded together and thus form a ring structure (heterocyclic structure). A hetero atom in the heterocyclic structure is a nitrogen atom in Formula (1). The heterocyclic structure is preferably a 5- or 6-membered ring structure and more preferably a 5-membered ring structure. The heterocyclic structure may be a fused ring, but is preferably a monocyclic ring.

Specific examples of a particularly preferred $R^1$ include a hydrogen atom, an alkyl group having 1 to 3 carbon atoms, groups obtained by combining -OR' (R' is a linear alkyl group having 1 to 5 carbon atoms) and $-(CH_2)_m-$ (m is an integer from 1 to 10 and preferably an integer from 1 to 5), and groups in which $R^1$ and C in Formula (1) are bonded together and thus form a heterocyclic structure (preferably a 5-membered ring structure).

The compound having the partial structure represented by Formula (1) is preferably represented by (the main chain structure of the polymer-the partial structure of the above-illustrated (1)-$R^1$) or (A- the partial structure of the above-illustrated (1)-B). Here, A is a linear alkyl group having 1 to 10 carbon atoms, a branched alkyl group having 3 to 10 carbon atoms, or a cyclic alkyl group having 3 to 10 carbon atoms. In addition, B is a group obtained by combining $-(CH_2)_m-$ (m is an integer from 1 to 10 and preferably an integer from 1 to 5), the partial structure of the above-illustrated (1), and a polymerizable group.

In addition, the compound having the partial structure represented by Formula (1) is preferably a structure represented by any one of Formulae (1-1) to (1-5) described below.

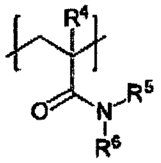 Formula (1-1) 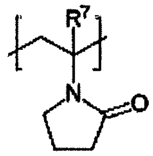 Formula (1-2) 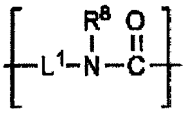 Formula (1-3)

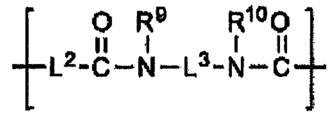 Formula (1-4) 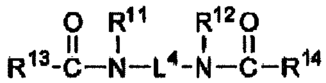 Formula (1-5)

(In Formula (1-1), $R^4$ represents a hydrogen atom or a methyl group and each of $R^5$ and $R^6$ independently represents a hydrogen atom or an organic group. In Formula (1-2), $R^7$ represents a hydrogen atom or a methyl group. In Formula (1-3), $L^1$ represents a divalent linking group and $R^8$ represents a hydrogen atom or an organic group. In Formula (1-4), each of $L^2$ and $L^3$ independently represents a divalent linking group and each of $R^9$ and $R^{10}$ independently represents a hydrogen atom or an organic group. In Formula (1-5), $L^4$ represents a divalent linking group and each of $R^{11}$ to $R^{14}$ independently represents a hydrogen atom or an organic group.)

In Formula (1-1), each of $R^5$ and $R^6$ independently represents a hydrogen atom or an organic group. The organic group is identical to $R^1$ in Formula (1), and the preferred range thereof is also identical.

In Formulae (1-3) to (1-5), $L^1$ to $L^4$ represent divalent linking groups. The divalent linking group is preferably a divalent linking group obtained through a combination with at least one of $-(CH_2)_m-$ (m is an integer from 1 to 10), a cyclic alkylene group having 5 to 10 carbon atoms, -O-, -CO-, -COO-, and -NH- and more preferably $-(CH_2)_m-$ (m is an integer from 1 to 8).

In Formulae (1-3) to (1-5), each of $R^8$ to $R^{14}$ independently represents a hydrogen atom or an organic group. The organic group is preferably a hydrocarbon group, specifically, an alkyl group or an alkenyl group.

The alkyl group may be substituted. In addition, the alkyl group may have a linear shape, a branched shape, or a ring shape, but preferably has a linear shape or a ring shape. The alkyl group is preferably an alkyl group having 1 to 10 carbon atoms, more preferably an alkyl group having 1 to 8 carbon atoms, and still more preferably an alkyl group having 1 to 6 carbon atoms.

The alkenyl group may be substituted. The alkenyl group is preferably an alkenyl group having 1 to 10 carbon atoms, more preferably an alkenyl group having 1 to 4 carbon atoms, and particularly preferably a vinyl group.

Examples of the substituent include a polymerizable group, a halogen atom, an alkyl group, a carboxylic acid ester group, a halogenated alkyl group, an alkoxy group, a methacryloyloxy group, an acryloyloxy group, an ether group, a sulfonyl group, a sulfide group, an amide group, an acyl group, a hydroxy group, a carboxyl group, or the like. Among the above-described substituents, a polymerizable group (for example, a vinyl group, a (meth)acryloyloxy group, a (meth)acryloyl group, an epoxy group, an aziridinyl group, or the like) is preferred and a vinyl group is more preferred.

In addition, the compound having the partial structure represented by Formula (1) may be a monomer or a polymer, but is preferably a polymer. The compound having the partial structure represented by Formula (1) is preferably a compound represented by Formula (1-1) or (1-2).

In addition, in a case in which the compound having the partial structure represented by Formula (1) is a polymer, the compound preferably has the partial structure in the side chain of the polymer.

The molecular weight of the compound having the partial structure represented by Formula (1) is preferably in a range of 50 to 1000000 and more preferably in a range of 500 to 500000. When the molecular weight is set in the above-described range, it is possible to more effectively achieve the effects of the present invention.

The content of the compound having the partial structure represented by Formula (1) is preferably in a range of 5% by mass to 80% by mass and more preferably in a range of 10% by mass to 60% by mass in the composition of the present invention.

Specific examples of the compound having the partial structure represented by Formula (1) include compounds having structures described below or exemplary compounds described below, but the compound is not limited thereto. In the present invention, particularly, the compound having the partial structure represented by Formula (1) is preferably polyacrylamide.

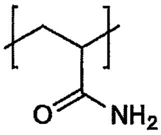
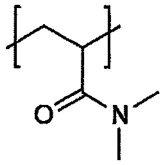
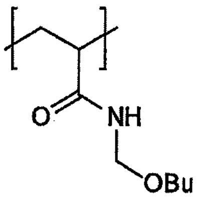
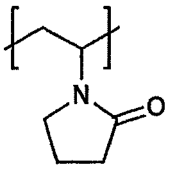

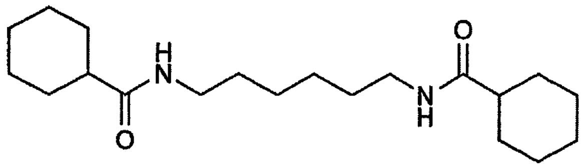
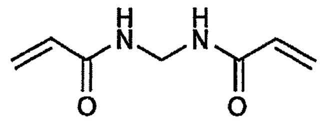

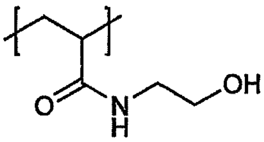
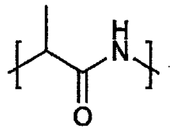

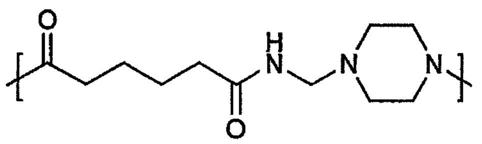
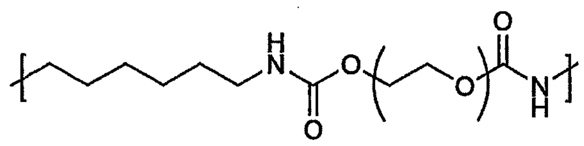

In addition, specific examples of the compound having the partial structure represented by Formula (1) include water-soluble polymers and examples of the preferred main chain structure include polyvinylpyrrolidone, poly(meth)acrylamide, polyamide, polyvinylpyrrolidone, polyurethane, and polyurea. The water-soluble polymer may be a copolymer and the copolymer may be a random copolymer.

As the polyvinylpyrrolidone, trade names KW-30 (manufactured by Nippon Shokubai Co., Ltd.) can be used.

Examples of the poly(meth)acrylamide include polymers and copolymers of (meth)acrylamide. Specific examples of the acrylamide include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide, N-hydroxyethyl-N-methylacrylamide, and the like. In addition, methacrylamides corresponding to the above-described poly(meth)acrylamides can also be used in a similar manner.

Examples of the water-soluble polyamide resin particularly include compounds obtained by copolymerizing a polyamide resin and a hydrophilic compound. A derivative of the water-soluble polyamide resin refers to a compound in which the structure of an amide bond is changed by the substitution or addition reaction of an atom in the water-soluble polyamide resin molecule such as a compound in which a water-soluble polyamide resin is used as a raw material and a hydrogen atom in an amide bond (-CONH-) is substituted with a methoxymethyl group ($-CH_2OCH_3$).

Examples of the polyamide resin include so-called "n-nylon" that is synthesized by the polymerization of ω amino acids and so-called "n,m-nylon" that is synthesized by the copolymerization of a diamine and a dicarboxylic acid. Among these, from the viewpoint of imparting hydrophilic properties, a copolymer of a diamine and a dicarboxylic acid is preferred and a reaction product of ε-caprolactam and a dicarboxylic acid is more preferred.

Examples of a hydrophilic compound include hydrophilic nitrogen-containing cyclic compounds, polyalkylene glycols, and the like.

Here, the hydrophilic nitrogen-containing cyclic compound refers to a compound including a ternary amine component in the side chain or the main chain and examples thereof include aminoethyl piperazine, bisaminopropyl piperazine, α-dimethylamino ε caprolactam, and the like.

Meanwhile, in the compound in which the polyamide resin and the hydrophilic compound are copolymerized together, for example, at least one selected from the group consisting of hydrophilic nitrogen-containing cyclic compounds and polyalkylene glycols is copolymerized in the main chain of the polyamide resin. Therefore, the hydrogen bonding capability at the amide-bonded portion in the polyamide resin is strong with respect to N-methoxymethylated nylon.

Among the compounds in which the polyamide resin and the hydrophilic compound are copolymerized together,

1) the reaction products of ε-caprolactam, the hydrophilic nitrogen-containing cyclic compound, and a dicarboxylic acid and 2) the reaction products of ε-caprolactam, polyalkylene glycol, and a dicarboxylic acid are preferred.

The above-described compounds are commercially available under a trademark of, for example, "AQ NYLON" from Toray Fine Chemicals Co., Ltd. The reaction products of ε-caprolactam, the hydrophilic nitrogen-containing cyclic compound, and dicarboxylic acid can be procured from AQ NYLON A-90 manufactured by Toray Fine Chemicals Co., Ltd., and the reaction products of ε-caprolactam, polyalkylene glycol, and dicarboxylic acid can be procured from AQ NYLON P-70 manufactured by Toray Fine Chemicals Co., Ltd. AQ NYLON A-90, P-70, P-95, and T-70 (manufactured by Toray Fine Chemicals Co., Ltd.) can be used.

The molar ratio of a polymer having a repeating unit that includes the partial structure represented by Formula (1) and a repeating unit that includes an epoxy group is preferably in a range of 10/90 to 90/10 and more preferably in a range of 30/70 to 70/30. The weight-average molecular weight of the copolymer is preferably in a range of 3,000 to 1,000,000 and more preferably in a range of 5,000 to 200,000.

The details of how to use the polymerizing compound such as the structure of the polymerizing compound, whether to use the polymerizing compounds singly or jointly, and the amount of the polymerizing compound added can be arbitrarily set in accordance with the ultimate performance design of the near-infrared-absorbing composition. For example, from the viewpoint of sensitivity, a structure with a large content of an unsaturated group per molecule is preferred, and, in many cases, a di- or higher-functional polymerizing compound is preferred. In addition, from the viewpoint of increasing the strength of the near-infrared cut-off filter, a tri- or higher-functional polymerizing compound is preferred, and, furthermore, a method for adjusting both sensitivity and strength to be desired values by jointly using polymerizing compounds with different numbers of functional groups and different polymerizable groups (for example, acrylic acid esters, methacrylic acid esters, styrene-based compounds, or vinyl ether-based compounds) is also effective. In addition, regarding the compatibility with other components included in the near-infrared-absorbing composition (for example, a metallic oxide, a pigment, and a polymerization initiator) and the dispersibility thereof, a method of selecting and using the polymerizing compound is an important factor, and there are cases in which the compatibility can be improved by, for example, using a low-purity compound or jointly using two or more low-purity compounds. In addition, from the viewpoint of improving the adhesiveness to a hard surface of a supporter or the like, it is also possible to select a specific structure.

The amount of the polymerizing compound added to the composition of the present invention can be set in a range of 1% by mass to 50% by mass, more preferably in a range of 1% by mass to 30% by mass, and particularly preferably in a range of 1% by mass to 20% by mass in relation to the total solid content excluding the solvent.

In addition, in a case in which the polymer having a repeating unit that includes a crosslinked group is used as the polymerizing compound, the amount of the polymerizing compound added is set to a range of 10% by mass to 75% by mass, more preferably to a range of 20% by mass to 65% by mass, and particularly preferably to a range of 20% by mass to 60% by mass in relation to the total solid content of the composition of the present invention excluding the solvent.

The number of the polymerizing compounds may be one or more and, in a case in which two or more polymerizing compounds are used, the total amount thereof needs to fall into the above-described range.

<Binder polymer>

The present invention may further include a binder polymer as necessary for the purpose of improving coating characteristics. As the binder polymer, an alkali-soluble resin can be used.

Regarding the alkali-soluble resin, the description of Paragraphs "0558" to "0571" and thereafter of JP2012-208494A ("0685" to "0700" in the specification of the corresponding US2012/0235099A) can be referred to, and the content thereof is incorporated into the present specification.

The content of the binder polymer in the present invention can be set to 80 mass% or lower of the total solid content of the composition, and can also be set to 50 mass% or lower, and furthermore, 30 mass% or lower.

<Surfactant>

The composition of the present invention may include a surfactant. Only one surfactant may be used or a combination of two or more surfactants may be used. The amount of the surfactant added can be set in a range of 0.0001% by mass to 2% by mass of the solid content of the composition of the present invention, and can be set in a range of 0.005% by mass to 1.0% by mass, and furthermore, in a range of 0.01% by mass to 0.1% by mass.

As the surfactant, a variety of surfactants such as a fluorine-based surfactant, a nonionic surfactant, a cationic surfactant, an anionic surfactant, and a silicone-based surfactant can be used.

Particularly, when the composition of the present invention includes at least any one of a fluorine-based surfactant and a silicone-based surfactant, the liquid characteristics (particularly, fluidity) are further improved when a coating fluid is produced, and thus it is possible to further improve the evenness of the coating thickness or liquid-saving

properties.

That is, in a case in which a film is formed using a coating fluid to which the composition including at least any one of fluorine-based surfactants and silicone-based surfactants is applied, the surface tension between a surface to be coated and the coating fluid decreases and thus the wetting properties with respect to the surface to be coated are improved and the coating properties with respect to the surface to be coated are improved. Therefore, in a case in which a thin film having a thickness of approximately several micrometers is formed using a small amount of the fluid as well, the inclusion of the surfactant is effective since a film having a uniform thickness with little thickness variation is more preferably formed.

The content of fluorine in the fluorine-based surfactant can be set, for example, in a range of 3% by mass to 40% by mass.

Examples of the fluorine-based surfactant include MEGAFAC F171, MEGAFAC F172, MEGAFAC F173, MEGAFAC F176, MEGAFAC F177, MEGAFAC F141, MEGAFAC F142, MEGAFAC F143, MEGAFAC F144, MEGAFAC R30, MEGAFAC F437, MEGAFAC F479, MEGAFAC F482, MEGAFAC F554, MEGAFAC F780, MEGAFAC R08 (manufactured by DIC Corporation), FLUORAD FC430, FLUORAD FC431, FLUORAD FC171 (manufactured by Sumitomo 3M, Ltd.), SURFLON S-382, SURFLON S-141, SURFLON S-145, SURFLON SC-101, SURFLON SC-103, SURFLON SC-104, SURFLON SC-105, SURFLON SC1068, SURFLON SC-381, SURFLON SC-383, SURFLON S393, SURFLON KH-40 (all manufactured by AGC Seimi Chemical Co., Ltd.), EFTOP EF301, EFTOP EF303, EFTOP EF351, EFTOP EF352 (all manufactured by Jemco Co., Ltd.), PF636, PF656, PF6320, PF6520, PF7002 (manufactured by OMNOVA Solution Inc.), and the like.

As the fluorine-based surfactant, a polymer having a fluoroaliphatic group can be used. Examples of the polymer having a fluoroaliphatic group include a fluorine-based surfactant having a fluoroaliphatic group, which is obtained from a fluoroaliphatic compound produced using a telomerization method (also referred to as a telomer method) or an oligomerization method (also referred to as an oligomer method).

Here, the "telomerization method" refers to a method for synthesizing a compound having one or two active groups in a molecule by polymerizing substances with a low molecular weight. In addition, the "oligomerization method" refers to a method of converting a monomer or a mixture of monomers to an oligomer.

Examples of the fluoroaliphatic group in the present invention include a $-CF_3$ group, a $-C_2F_5$ group, a $-C_3F_7$ group, a $-C_4F_9$ group, a $-C_5F_{11}$ group, a $-C_6F_{13}$ group, a $-C_7P_{15}$ group, a $-C_8F_{17}$ group, a $C_9F_{19}$ group, and a $C_{10}F_{21}$ group, and, for compatibility and coatability, a $-C_2F_5$ group, a $-C_3F_7$ group, a $-C_4F_9$ group, a $-C_5F_{11}$ group, a $-C_6F_{13}$ group, a $-C_7F_{15}$ group, or a $-C_8F_{17}$ group can be used.

The fluoroaliphatic compound in the present invention can be synthesized using the method described in JP2002-90991A.

As the polymer having the fluoroaliphatic group in the present invention, a copolymer of a monomer having the fluoroaliphatic group in the present invention and (poly(oxyalkylene)) acrylate and/or (poly(oxyalkylene)) methacrylate can be used. This copolymer may be an irregularly-disposed copolymer or a block-copolymerized copolymer. In addition, examples of the poly(oxyalkylene) group include a poly(oxyethylene) group, a poly(oxypropylene) group, and a poly(oxybutylene) group, and the poly(oxyalkylene) group may be a unit having alkylene with different chain lengths in the same chain length such as a poly(block-linked body of oxyethylene, oxypropylene, and oxyethylene) group or a poly(block-linked body of oxyethylene and oxypropylene) group. Furthermore, the copolymer of the monomer having the fluoroaliphatic group and (poly(oxyalkylene)) acrylate (or methacrylate) may be not only a 2-membered copolymer but also a 3- or more-membered copolymer obtained by copolymerizing two or more different monomers having a fluoroaliphatic group or two or more different (poly(oxyalkylene)) acrylates (or methacrylates) and the like at the same time.

Examples of a commercially available surfactant including a polymer having a fluoro aliphatic group in the present invention include the surfactants described in Paragraph "0552" in JP2012-208494A ("0678" in the specification of US2012/0235099A) and the content thereof is incorporated into the specification of the present application. In addition, it is possible to use MEGAFAC F-781 (manufactured by Dainippon Ink and Chemicals), a copolymer of an acrylate (or methacrylate) having a $C_6F_{13}$ group, (poly(oxyethylene)) acrylate (or methacrylate), and (poly(oxypropylene) acrylate (or methacrylate)), a copolymer of an acrylate (or methacrylate) having a $C_8F_{17}$ group and (poly(oxyalkylene) acrylate (or methacrylate)), a copolymer of an acrylate (or methacrylate) having a $C_8F_{17}$ group, (poly(oxyethylene)) acrylate (or methacrylate), and (poly(oxypropylene) acrylate (or methacrylate)), or the like.

Examples of nonionic surfactants include polyoxyethylene alkyl ethers, polyoxyethylene alkyl allyl ethers, polyoxyethylene aliphatic acid esters, sorbitan aliphatic acid esters, polyoxyethylene sorbitan aliphatic acid esters, polyoxyethylene alkyl amines, glycerin aliphatic acid esters, oxyethylene oxypropylene block copolymers, acetylene glycol-based surfactants, acetylene-based polyoxyethylene oxides, and the like. The above-described surfactants can be used singly or two or more surfactants can be used.

Examples of specific commercially available products thereof include SURFYNOL 61, 82, 104, 104E, 104H, 104A, 104BC, 104DPM, 104PA, 104PG-50, 104S, 420, 440, 465, 485, 504, CT-111, CT-121, CT-131, CT-136, CT-141, CT-151, CT-171, CT-324, DF-37, DF-58, DF-75, DF-110D, DF-210, GA, OP-340, PSA-204, PSA-216, PSA-336, SE,

SE-F, TG, GA, DYNOL 604 (all manufactured by Nissin Chemical Co., Ltd. and Air Products & Chemicals, Inc.), OLFINE A, B, AK-02, CT-151W, E1004, E1010, P, SPC, STG, Y, 32W, PD-001, PD-002W, PD-003, PD-004, EXP. 4001, EXP. 4036, EXP. 4051, AF-103, AF-104, SK-14, AE-3 (all manufactured by Nissin Chemical Co., Ltd.), ACETYLENOL E00, E13T, E40,E60, E81, E100, E200 (all are trade names and are manufactured by Kawaken Fine Chemicals Co., Ltd.), and the like. Among these, OLFINE E1010 is preferred.

Additionally, regarding the nonionic surfactants, specifically, the nonionic surfactants described in Paragraph "0553" in JP2012-208494A ("0679" in the specification of the corresponding US2012/0235099A) can be referred to and the contents thereof can be incorporated into the specification of the present application by reference.

Specific examples of cationic surfactants include the cationic surfactants described in Paragraph "0554" in JP2012-208494A ("0680" in the specification of the corresponding US2012/0235099A) and the contents thereof can be incorporated into the specification of the present application by reference.

Specific examples of the anionic surfactants include W004, W005, W017 (manufactured by Yusho Co., Ltd.), and the like.

Examples of silicone-based surfactants include the silicone-based surfactants described in Paragraph "0556" in JP2012-208494A ("0682" in the specification of the corresponding US2012/0235099A) and the contents thereof can be incorporated into the specification of the present application by reference. In addition, examples thereof also include "TORAY SILICONE SF8410", TORAY SILICONE SF8427", TORAY SILICONE SF8400", "ST80PA", "ST83PA", "ST86PA" all manufactured by Dow Corning Toray Co., Ltd., "TSF-400", "TSF-401", "TSF-410", "TSF-4446" manufactured by Momentive Performance Materials Worldwide Inc., "KP321", "KP323", "KP324", "KP340" manufactured by Shin-Etsu Chemical Co., Ltd. and the like.

<Polymerization initiator>

The composition of the present invention may include a polymerization initiator. The number of the polymerization initiators included may be one or more and, in a case in which the composition includes two or more polymerization initiators, the total amount thereof falls into the following range. For example, the content of the polymerization initiator is preferably in a range of 0.01% by mass to 30% by mass, more preferably in a range of 0.1% by mass to 20% by mass, and still more preferably in a range of 0.1% by mass to 15% by mass of the solid content of the composition of the present invention.

The polymerization initiator is not particularly limited as long as the polymerization initiator has the capability of initiating the polymerization of the polymerizing compounds using either or both light and heat and can be appropriately selected depending on the purpose, but is preferably a photopolymerizing compound. In a case in which polymerization is initiated using light, the polymerization initiator preferably has photosensitivity to light rays in an ultraviolet to visible light range.

In addition, in a case in which polymerization is initiated using heat, a polymerization initiator that is decomposed at a temperature in a range of 150°C to 250°C is preferred.

The polymerization initiator that can be used in the present invention is preferably a compound having at least an aromatic group and examples thereof include acylphosphine compounds, acetophenone-based compounds, $\alpha$-aminoketone compounds, benzophenone-based compounds, benzoin ether-based compounds, ketal derivative compounds, thioxanthone compounds, oxime compounds, hexaaryl biimidazole compounds, trihalomethyl compounds, azo compounds, organic peroxides, diazonium compounds, iodonium compounds, sulfonium compounds, azinium compounds, benzoin ether-based compounds, ketal derivative compounds, onium salt compounds such as metallocene compounds, organic boron salt compounds, disulfone compounds, and the like.

From the viewpoint of sensitivity, oxime compounds, acetophenone-based compounds, $\alpha$-aminoketone compounds, trihalomethyl compounds, hexaaryl biimidazole compounds, and thiol compounds are preferred.

Regarding the acetophenone-based compounds, the trihalomethyl compounds, the hexaaryl biimidazole compounds, and the oxime compounds, specifically, the description in Paragraphs "0506" to "0510" in JP2012-208494A ("0622" to "0628" in the specification of the corresponding US2012/0235099A) and the like, can be referred to and the content thereof is incorporated into the specification of the present application.

The photopolymerization initiator is more preferably a compound selected from a group consisting of an oxime compound, an acetophenone-based compound, and an acylphosphine compound. More specifically, for example, it is also possible to use the aminoacetophenone-based initiators described in JP1998-291969A (JP-H10-291969A), the acylphosphine oxide-based initiators described in JP4225898B, the above-described oxime-based initiators, and, furthermore, as the oxime-based initiators, the compounds described in JP2001-233842A.

As the oxime compound, it is possible to use a commercially available product IRGACURE-OXE01 (manufactured by BASF) or IRGACURE-OXE02 (manufactured by BASF). As the acetophenone-based initiator, it is possible to use commercially available products IRGACURE-907, IRGACURE-369, and IRGACURE-379 (trade name, all manufactured by BASF Japan). In addition, as the acylphosphine-based initiator, it is possible to use a commercially available

product IRGACURE-819 or DAROCUR-TPO (trade name, manufactured by BASF Japan).

<Other components>

In the composition of the present invention, in addition to the above-described essential components or the above-described additives, other components can be appropriately selected and used depending on the purpose as long as the effect of the present invention is not impaired.

Examples of other components that can be jointly used include a binder polymer, a dispersing agent, a sensitizer, a crosslinking agent, a curing accelerator, a filler, a thermal curing accelerator, a thermopolymerization inhibitor, a plasticizer, and the like and, furthermore, an accelerator of adhesion to the surface of a base material and other auxiliary agents (for example, conductive particles, a filler, a defoamer, a flame retardant, a levelling agent, a peeling accelerator, an antioxidant, a fragrance, a surface tension adjuster, a chain transfer agent, and the like) may also be jointly used.

When the composition of the present invention appropriately includes the above-described components, it is possible to adjust properties such as stability and film properties of the target near-infrared cut-off filter.

Regarding the above-described components, for example, the descriptions in Paragraphs "0183" and thereafter in JP2012-003225A ("0237" and thereafter in the specification of the corresponding US2013/0034812A), Paragraphs "0101" and "0102", Paragraphs "0103" and "0104", and Paragraphs "0107" to "0109" in JP2008-250074A, and the like can be referred to and the contents thereof can be incorporated into the specification of the present application.

Since the composition of the present invention can be produced in a liquid form, a near-infrared cut-off filter can be easily produced by, for example, directly applying and drying the composition of the present invention, and it is possible to improve production suitability which has been insufficient in the above-described near-infrared cut-off filter of the related art.

The use of the near-infrared-absorbing composition of the present invention is not particularly limited, and examples thereof include a near-infrared cut-off filter on the light-receiving side of a solid-state imaging element (for example, a near-infrared cut-off filter for a wafer-level lens, or the like), a near-infrared cut-off filter on the back surface side (the side opposite to the light-receiving side) of a solid-state imaging element, and the like. The near-infrared-absorbing composition of the present invention is preferably used for a light-shielding film on the light-receiving side of a solid-state imaging element. Particularly, the near-infrared-absorbing composition of the present invention is preferably directly applied onto a solid-state imaging sensor so as to form a coated film.

The near-infrared-absorbing composition of the present invention is preferably used to produce a near-infrared cut-off filter having a film thickness of 200 μm or lower and a visible light transmissivity of 90% or higher.

In a case in which an infrared-ray-cut layer is formed through coating, the viscosity of the near-infrared-absorbing composition of the present invention is preferably in a range of 1 mPa·s to 3000 mPa·s, more preferably in a range of 10 mPa·s to 2000 mPa·s, and still more preferably in a range of 100 mPa·s to 1500 mPa·s.

In a case in which the near-infrared-absorbing composition of the present invention is for a near-infrared cut-off filter on a light-receiving side of a solid-state imaging element and forms an infrared-ray cut layer by being applied, from the viewpoint of a property for forming a thick film and uniform coatability, the viscosity of the near-infrared-absorbing composition is preferably in a range of 10 mPa·s to 3000 mPa·s, more preferably in a range of 500 mPa·s to 1500 mPa·s, and still more preferably in a range of 700 mPa·s to 1400 mPa·s.

The total solid content of the near-infrared-absorbing composition of the present invention is varied depending on a coating method, but is preferably in a range of 1% by mass to 50% by mass of the composition, more preferably in a range of 10% by mass to 30% by mass, and still more preferably in a range of 1% by mass to 30% by mass.

The present invention also relates to a production method of the near-infrared-absorbing composition including a step of producing the polymer (A1) using the polymerizable monomer having an acid group or a salt thereof and a step of producing the near-infrared-absorbing compound by reacting the polymer (A1) and the copper component.

The near-infrared cut-off filter and composition of the present invention include a near-infrared-absorbing substance, and the percentage of a change in absorbance at a wavelength of 400 nm and the percentage of a change in absorbance at a wavelength of 800 nm before and after heating the near-infrared-absorbing composition at 200°C for five minutes are both preferably 7% or lower and particularly preferably 5% or lower. The near-infrared cut-off filter of the present invention is formed using the composition of the present invention. The present invention includes the compound (organic compound) obtained from the reaction between the polymer (A1) having an acid group or a salt thereof and the copper component as the near-infrared-absorbing substance and thus exhibits excellent heat resistance.

In addition, in the near-infrared cut-off filter and composition of the present invention, the percentages of a change in the absorbance ratio represented by the following expression before and after the filter and the composition are left to stand for one hour at a high temperature and a high humidity of 85°C and a relative humidity of 85% are preferably 7% or lower, more preferably 4% or lower, and still more preferably 2% or lower respectively.

[(Absorbance ratio before test-absorbance ratio after test)/absorbance ratio before test]

Here, the absorbance ratio refers to (maximum absorbance at a wavelength in a range of 700 nm to 1400 nm/minimum absorbance at a wavelength in a range of 400 nm to 700 nm).

In the near-infrared cut-off filter obtained using the composition of the present invention, the optical transmissivity thereof preferably satisfies at least one of the following conditions (1) to (9), more preferably satisfies all of the following conditions (1) to (8), and still more preferably satisfies all of the following conditions (1) to (9).

(1) The optical transmissivity at a wavelength of 400 nm is preferably 80% or higher, more preferably 90% or higher, still more preferably 92% or higher, and particularly preferably 95% or higher.
(2) The optical transmissivity at a wavelength of 450 nm is preferably 80% or higher, more preferably 90% or higher, still more preferably 92% or higher, and particularly preferably 95% or higher.
(3) The optical transmissivity at a wavelength of 500 nm is preferably 80% or higher, more preferably 90% or higher, still more preferably 92% or higher, and particularly preferably 95% or higher.
(4) The optical transmissivity at a wavelength of 550 nm is preferably 80% or higher, more preferably 90% or higher, still more preferably 92% or higher, and particularly preferably 95% or higher.
(5) The optical transmissivity at a wavelength of 700 nm is preferably 20% or lower, more preferably 15% or lower, still more preferably 10% or lower, and particularly preferably 5% or lower.
(6) The optical transmissivity at a wavelength of 750 nm is preferably 20% or lower, more preferably 15% or lower, still more preferably 10% or lower, and particularly preferably 5% or lower.
(7) The optical transmissivity at a wavelength of 800 nm is preferably 20% or lower, more preferably 15% or lower, still more preferably 10% or lower, and particularly preferably 5% or lower.
(8) The optical transmissivity at a wavelength of 850 nm is preferably 20% or lower, more preferably 15% or lower, still more preferably 10% or lower, and particularly preferably 5% or lower.
(9) The optical transmissivity at a wavelength of 900 nm is preferably 20% or lower, more preferably 15% or lower, still more preferably 10% or lower, and particularly preferably 5% or lower.

In addition, regarding the optical transmissivity of the near-infrared cut-off filter, the optical transmissivity is preferably 95% or higher in the entire wavelength range of 450 nm to 500 nm.

While the near-infrared cut-off filter can be appropriately selected depending on the purpose, the film thickness thereof is preferably set to 500 μm or smaller, more preferably set to 300 μm or smaller, still more preferably set to 250 μm or smaller, and particularly preferably set to 200 μm. The lower limit of the film thickness is, for example, preferably 1 μm or greater, more preferably 5 μm or greater, and preferably 20 μm or greater. According to the composition of the present invention, since the composition has strong near-infrared shielding properties, it is possible to decrease the film thickness of the near-infrared cut-off filter.

In the near-infrared cut-off filter, at a film thickness of 300 μm or smaller, the optical transmissivity in the entire wavelength range of 400 nm to 550 nm is preferably 85% or higher and more preferably 90% or higher. In addition, the optical transmissivity in at least one point in a wavelength range of 700 nm to 800 nm is preferably 20% or lower, and the optical transmissivity in the entire wavelength range of 700 nm to 800 nm is more preferably 20% or lower. According to the present invention, it is possible to ensure a wide visible light range with a high transmissivity and to provide a near-infrared cut-off filter having strong near-infrared shielding properties.

The present invention may be a laminate including a near-infrared-ray cut layer obtained by hardening the near-infrared-absorbing composition and a dielectric multilayer film. Examples of an aspect of the present invention include (i) an aspect in which a transparent supporter, the near-infrared-ray cut layer, and the dielectric multilayer film are provided in the above-described order and (ii) an aspect in which the near-infrared-ray cut layer, a transparent supporter, and the dielectric multilayer film are provided in the above-described order. The above-described transparent supporter may be a glass substrate or a transparent resin substrate.

The dielectric multilayer film is a film having a capability of reflecting and/or absorbing near-infrared-rays.

As a material for the dielectric multilayer film, for example, a ceramic material can be used. Alternatively, a noble metal film absorbing light in the near-infrared range may be used in consideration of thickness and the number of layers so that the visible light transmissivity of the near-infrared cut-off filter is not affected.

As the dielectric multilayer film, specifically, a constitution in which high-refractive-index material layers and low-refractive-index material layers are alternately laminated can be preferably used.

As a material for constituting the high-refractive-index material layer, a material having a refractive index of 1.7 or higher can be used, and a material having a refractive index generally in a range of 1.7 to 2.5 is selected.

Examples of the above-described material include titanium oxide (titania), zirconium oxide, tantalum pentaoxide, niobium pentaoxide, lanthanum oxide, yttrium oxide, zinc oxide, zinc sulfide, indium oxide, and a material containing the above-described oxide as a main component and a small amount of titanium oxide, tin oxide, and/or cerium oxide.

Among these, titanium oxide (titania) is preferred.

As a material for constituting the low-refractive-index material layer, a material having a refractive index of 1.6 or lower can be used, and a material having a refractive index generally in a range of 1.2 to 1.6 is selected.

Examples of the above-described material include silica, alumina, lanthanum fluoride, magnesium fluoride, and sodium aluminum hexafluoride. Among these, silica is preferred.

The thickness of each of the high-refractive-index material layer and the low-refractive-index material layer is generally a thickness of 0.1λ to 0.5λ of the wavelength λ (nm) of an infrared ray to shield. When the thickness is outside the above-described range, the product (nxd) of the refractive index (n) and the film thickness (d) becomes significantly different from the optical film thickness computed from λ/4, and thus the relationship of optical characteristics such as reflection and refraction is destroyed, and there is a tendency that the control of shielding and permeation of a specific wavelength becomes difficult.

In addition, the number of layers laminated in the dielectric multilayer film is preferably in a range of 5 to 50 and more preferably in a range of 10 to 45.

Furthermore, the present invention also relates to a production method of a near-infrared cut-off filter including a step of forming a film by applying the near-infrared-absorbing composition of the present invention (preferably through coating or printing and still more preferably applicator coating) to a light-receiving side of a solid-state imaging element and a step of drying the film. The film thickness, the laminate structure, and the like can be appropriately selected depending on the purpose.

A supporter may be a transparent substrate made of glass or the like, a solid-state imaging element, another substrate (for example, a glass substrate 30 described below) provided on the light-receiving side of the solid-state imaging element, or a layer such as a flattened layer provided on the light-receiving side of the solid-state imaging element.

The near-infrared-absorbing composition (coating fluid) can be applied to the supporter using a method such as, for example, a dropwise addition method (drop casting), spin coating, slit spin coating, slit coating, screen printing, applicator application, or the like. In the case of the dropwise addition method (drop casting), it is preferable to form a dropwise addition region for the near-infrared-absorbing composition including a photoresist as a partition wall on a glass substrate so that a uniform film can be formed with a predetermined film thickness. Meanwhile, it is possible to adjust the film thickness using the amount of the composition added dropwise, the concentration of the solid content, and the area of the dropwise addition region.

In addition, the conditions for drying the coated film vary depending on the kind and proportions of individual components and a solvent; however, generally, the coated film is dried at a temperature in a range of 60°C to 200°C for approximately 30 seconds to 15 minutes.

A method for forming a near-infrared cut-off filter using the near-infrared-absorbing composition of the present invention may include other steps. The other steps are not particularly limited and can be appropriately selected depending on the purpose. Examples thereof include a surface treatment step of the base material, a pretreatment step (prebaking step), a curing treatment step, a post heating step (post baking step), and the like.

<Preheating step and post heating step>

The heating temperatures in the preheating step and the post heating step are generally in a range of 80°C to 200°C and preferably in a range of 90°C to 180°C.

The heating times in the preheating step and the post heating step are generally in a range of 30 seconds to 400 seconds and preferably in a range of 60 seconds to 300 seconds.

<Curing treatment step>

The curing treatment step refers to a step of carrying out a curing treatment on the formed film as necessary and the curing treatment improves the mechanical strength of the near-infrared cut-off filter.

The curing treatment step is not particularly limited and can be appropriately selected depending on the purpose and preferred examples thereof include a full-surface exposure treatment, a full-surface thermal treatment, and the like. In the present invention, the meaning of "exposure" includes the irradiation of the surface with radioactive rays such as electron beams or X rays as well as light rays having a variety of wavelengths.

The exposure is preferably carried out through irradiation with radioactive rays and, as the radioactive rays that can be used in the exposure, particularly, ultraviolet rays such as electron beams, KrF, ArF, g-rays, h-rays, or i-rays or visible light are preferably used. Preferably, KrF, g-rays, h-rays, or i-rays are preferred.

Examples of the exposure method include stepper exposure, exposure using a high-pressure mercury lamp, and the like.

The exposure amount is preferably in a range of 5 $J/cm^2$ to 3000 $mJ/cm^2$, more preferably in a range of 10 $J/cm^2$ to 2000 $mJ/cm^2$, and particularly preferably in a range of 50 $J/cm^2$ to 1000 $mJ/cm^2$.

Examples of a method for the full-surface exposure treatment include a method in which the full surface of the above-described formed film is exposed. In a case in which the near-infrared-absorbing composition includes the polymerizing compound, the full-surface exposure accelerates the curing of a polymerizing component in the film formed of the composition, makes the film cured to a greater extent, and improves the mechanical strength and the durability.

An apparatus for carrying out the full-surface exposure is not particularly limited and can be appropriately selected depending on the purpose, and preferred examples thereof include UV steppers such as ultrahigh-pressure mercury lamps.

In addition, examples of the method for the full-surface thermal treatment include a method in which the full surface of the above-described formed film is heated. The heating of the full surface increases the film strength of a pattern.

The heating temperature during the full-surface heating is preferably in a range of 120°C to 250°C and more preferably in a range of 120°C to 250°C. When the heating temperature is 120°C or higher, the film strength is improved by the heating treatment and, when the heating temperature is 250°C or lower, components in the film are decomposed and it is possible to prevent the film from becoming weak and brittle.

The heating time in the full-surface heating is preferably in a range of 3 minutes to 180 minutes and more preferably in a range of 5 minutes to 120 minutes.

An apparatus for carrying out the full-surface heating is not particularly limited and can be appropriately selected from well-known apparatuses depending on the purpose, and examples thereof include a drying oven, a hot plate, an IR heater, and the like.

In addition, the present invention also relates to a camera module having a solid-state imaging element and a near-infrared cut-off filter disposed on the light-receiving side of the solid-state imaging element, in which the near-infrared cut-off filter is the near-infrared cut-off filter of the present invention.

Hereinafter, a camera module according to an embodiment of the present invention will be described with reference to Figs. 2 and 3, but the present invention is not limited to the following specific example.

Meanwhile, in Figs, 2 and 3, common reference signs will be given to common portions.

In addition, in the description, "up", "upward", and "upside" indicate a side far from a silicon substrate 10, and "down", "downward", and "downside" indicate a side close to the silicon substrate 10.

Fig. 2 is a schematic sectional view illustrating the constitution of a camera module including a solid-state imaging element.

A camera module 200 illustrated in Fig. 2 is connected to a circuit board 70, which is a mounting substrate, through solder balls 60.

In detail, the camera module 200 includes a solid-state imaging element (solid-state imaging element substrate) 100 including imaging element portions 12 on a first main surface of the silicon substrate, a flattening layer (not illustrated in Fig. 2) provided on the first main surface side (light-receiving side) of the solid-state imaging element 100, a near-infrared cut-off filter 42 provided on the flattening layer, a lens holder 50 which is disposed above the near-infrared cut-off filter 42 and includes an imaging lens 40 in an inner space, and a light and electromagnetic shield 44 disposed so as to cover the surrounding of the solid-state imaging element 100 and the glass substrate 30. Meanwhile, the glass substrate 30 (light-permeable substrate) may be provided on the flattening layer. The respective members are adhered together using an adhesive 45.

The present invention relates to a production method of a camera module including the solid-state imaging element 100 and the near-infrared cut-off filter 42 disposed on the light-receiving side of the solid-state imaging element 100, including a step of forming the near-infrared cut-off filter 42 by applying the near-infrared-absorbing composition of the present invention to the light-receiving side of the solid-state imaging element 100. In the camera module according to the present embodiment, the near-infrared cut-off filter 42 can be formed on the flattening layer by, for example, applying the near-infrared-absorbing composition of the present invention so as to form a film. The method for coating the near-infrared cut-off filter is as described above.

In the camera module 200, incidence ray hu from the outside sequentially permeates the imaging lens 40, the near-infrared cut-off filter 42, the glass substrate 30, and the flattening layer, and then reaches the imaging element portion 12 in the solid-state imaging element 100.

The camera module 200 includes the near-infrared cut-off filter directly provided on the flattening layer, but the near-infrared cut-off filter may be directly provided on a micro lens without the flattening layer, or the near-infrared cut-off filter may be provided on the glass substrate 30, or the glass substrate 30 provided with the near-infrared cut-off filter may be adhered to the camera module.

Fig. 3 is an enlarged sectional view of the solid-state imaging element 100 in Fig. 2.

The solid-state imaging element 100 includes the imaging element portions (imaging elements) 12 on the first main surface of the silicon substrate 10, which is a substrate, an interlayer insulating film 13, a base layer 14, a color filter 15, an overcoat 16, and micro lenses 17 in this order. A red color filter 15R, a green color filter 15G, and a blue color filter 15B (hereinafter, these will be collectively referred to as "color filter 15") or the micro lenses 17 are respectively disposed so as to correspond to the imaging element portions 12. A light-shielding film 18, an insulating film 22, a metallic

electrode 23, a solder resist layer 24, an inner electrode 26, and an element surface electrode 27 are provided on a second main surface which is on a side opposite to the first main surface of the silicon substrate 10. The respective members are adhered together using an adhesive 20.

A flattening layer 46 and the near-infrared cut-off filter 42 are provided on the micro lenses 17. The near-infrared cut-off filter 42 may be provided on the micro lenses 17 and between the base layer 14 and the color filter 15 or between the color filter 15 and the overcoat 16 instead of being provided on the flattening layer 46. Particularly, the near-infrared cut-off filter is preferably provided at a position 2 mm or less (more preferably 1 mm or less) away from the surfaces of the micro lenses 17. When the near-infrared cut-off filter is provided at this position, it is possible to simplify the step of forming the near-infrared cut-off filter and to sufficiently cut unnecessary near-infrared rays travelling toward the micro lenses, and thus the near-infrared-ray shielding properties can be further enhanced.

Regarding the solid-state imaging element 100, the description of Paragraph "0245" (Paragraph "0407" in the specification of the corresponding US2012/068292A) of JP2012-068418A can be referred to, and the content thereof is incorporated into the present specification.

The near-infrared cut-off filter of the present invention can be subjected to a solder reflow step. When the camera module is produced through the solder reflow step, the automatic mounting of an electronic component-mounted substrate or the like which requires soldering becomes possible, and it is possible to significantly improve the productivity compared with a case in which the solder reflow step is not used. Furthermore, since the solder reflow step is automatically carried out, it is also possible to reduce the cost. In a case in which the near-infrared cut-off filter is subjected to the solder reflow step, the near-infrared cut-off filter is exposed to a temperature in a range of approximately 250°C to 270°C, and thus the infrared cut-off filter is preferably heat-resistant enough to withstand the solder reflow step (hereinafter, also referred to as "solder reflowability").

In the present specification, "having solder reflowability" means that the infrared cut-off filter maintains its characteristics before and after being heated at 200°C for 10 minutes. More preferably, the infrared cut-off filter maintains its characteristics before and after being heated at 230°C for 10 minutes. Still more preferably, the infrared cut-off filter maintains its characteristics before and after being heated at 250°C for three minutes. In a case in which the near-infrared cut-off filter does not have solder reflowability, when being held under the above-described conditions, there are cases in which the near-infrared-absorbing function of the near-infrared cut-off filter degrades or the functions become insufficient for films.

In addition, the present invention also relates to a production method of a camera module including a step of a reflow treatment. Even when the reflow step is provided, the near-infrared cut-off filter of the present invention is capable of maintaining its near-infrared-absorbing function, and there are no cases in which the characteristics of the camera module having reduced size and weight and having improved performance are impaired.

Figs. 4 to 6 are schematic sectional views illustrating examples of a near-infrared cut-off filter peripheral portion in the camera module.

As illustrated in Fig. 4, the camera module may have the solid-state imaging element 100, the flattening layer 46, an ultraviolet and infrared light-reflecting film 80, a transparent base material 81, a near-infrared-absorbing layer 82, and an antireflection layer 83 in this order.

The ultraviolet and infrared light-reflecting film 80 has an effect of imparting and enhancing the functions of the near-infrared cut-off filter, and, for example, Paragraphs "0033" to "0039" in JP2013-68688A can be referred to, and the content thereof is incorporated into the present specification.

The transparent base material 81 transmits light having wavelengths in the visible light range, and, for example, Paragraphs "0026" to "0032" in JP2013-68688A can be referred to, and the content thereof is incorporated into the present specification.

The near-infrared-absorbing layer 82 is a layer formed by applying the above-described near-infrared-absorbing composition of the present invention.

The antireflection layer 83 has a function of preventing the reflection of light incident on the near-infrared cut-off filter so as to improve the transmissivity and allowing efficient use of the incidence ray, and, for example, Paragraph "0040" in JP2013-68688A can be referred to, and the content thereof is incorporated into the present specification.

As illustrated in Fig. 5, the camera module may have the solid-state imaging element 100, the near-infrared-absorbing layer 82, the antireflection layer 83, the flattening layer 46, the antireflection layer 83, the transparent base material 81, and the ultraviolet and infrared light-reflecting film 80 in this order.

As illustrated in Fig. 6, the camera module may have the solid-state imaging element 100, the near-infrared-absorbing layer 82, the ultraviolet and infrared light-reflecting film 80, the flattening layer 46, the antireflection layer 83, the transparent base material 81, and the antireflection layer 83 in this order.

Thus far, the embodiment of the camera module has been described with reference to Figs. 2 to 6, but the present invention is not limited to the embodiment of Figs. 2 to 6.

Examples

Hereinafter, the present invention will be more specifically described using examples. Materials, amounts used, proportions, the contents of treatments, the orders of treatments, and the like described in the following examples can be appropriately changed within the scope of the gist of the present invention. Therefore, the scope of the present invention is not limited to specific examples described below.
In the present examples, the following abbreviations were employed.

<Polymer (A1) including acid group or salt thereof>

Polymers (P-1) to (P-17), (P-19) to (P-21): the above-described compounds P-1 to P-17 and P-19 to P-21
Polymer (P-Rl): infrared-ray-shielding resin described in Example 1 of JP2010-134457A

<Synthesis Example of Polymer (P-1)>

Water (60 g) was put into a three-neck flask and heated to 57°C in a nitrogen atmosphere. A monomer solution obtained by dissolving 2-acrylamide-2-methylproanesulfonic acid (100 g) in water (160 g) and an initiator solution obtained by dissolving VA-046B (water-soluble azo-based polymerization initiator manufactured by Wako Pure Chemical Industries, Ltd., 2,2'-Azobis[2-(2-imidazolin-2-yl)propane]disulfate dehydrate, 1.164 g, 0.5 mol% of the monomer) in water (80 g) were added thereto dropwise at the same time over two hours. After the end of the dropwise addition, the components were stirred together for two hours, then, were heated to 65°C, and furthermore, were stirred together, and a reaction was finished, thereby obtaining a polymer (P-1).
Polymers (P-2) to (P-17) and (P-20) were also obtained using the same method as for the polymer (P-1).

<Synthesis Example of Polymer (P-19)>

1-Methoxy-2-propanol (54 g) was put into a three-neck flask and was heated to 85°C in a nitrogen atmosphere. A solution obtained by dissolving methacryloyloxy ethylmalonic acid (12.95 g), benzyl methacrylate (7.04 g), and V-601 (0.46 g, manufactured by Wako Pure Chemical Industries, Ltd., azo-based polymerization initiator) in 1-methoxy-2-propanol (126 g) was added thereto dropwise over two hours. After the end of the dropwise addition, the components were stirred together for four hours, and a reaction was finished, thereby obtaining a polymer (polymer (P-19).
A polymer (P-21) was also obtained using the same method as for the polymer (P-19).
The weight-average molecular weights of the polymers (P-1) to (P-17) and (P-19) to (P-21) are shown in Tables 1 and 2.

<Near-infrared-absorbing composition>

0.4 Equivalent weight of copper hydroxide (18.83 g) of the amount of an acid group in the polymer (P-1) was added to a solution of the obtained polymer (P-1), and the components were stirred together at 50°C for one hour, thereby obtaining a near-infrared-absorbing composition 1. In addition, near-infrared-absorbing compositions 2 to 23 shown in Table 3 (hereinafter, the near-infrared-absorbing compositions that reacted with copper components in Examples 1 to 22 will be referred to as polymer copper complexes 1 to 22) were obtained using the same method as for the near-infrared-absorbing composition 1.

« Production of near-infrared cut-off filter»

Each of the near-infrared-absorbing compositions prepared in the examples and comparative examples was applicator-applied onto a glass substrate using an applicator coating method (a baker applicator manufactured by Yoshimits Seiki, used with the slit width of an YBA-3 type adjusted to be 250 μm) and was preheated (prebaked) at 100°C for 120 seconds. After that, all the samples were heated at 180°C for 300 seconds on a hot plate, thereby obtaining near-infrared cut-off filters having a film thickness of 100 μm.

«Evaluation of near-infrared shielding properties»

The transmissivities at a wavelength of 800 nm of the near-infrared cut-off filters obtained as described above were measured using a spectrophotometer U-4100 (manufactured by Hitachi High-Technologies Corporation). The near-infrared shielding properties were evaluated using the following standards. The results are shown in the following table.

A: transmissivity at 800 nm≤5%
B: 5%<transmissivity at 800 nm≤7%
C: 7%<transmissivity at 800 nm≤10%
D: 10%<transmissivity at 800 nm

«Evaluation of heat resistance»

The near-infrared cut-off filters obtained as described above were left to stand at 200°C for five minutes. The absorbance of each of the near-infrared cut-off filters at 800 nm was measured respectively before and after a heat resistance test, and the percentage of a change in the absorbance at 800 nm, which was represented by ((absorbance before test-absorbance after test)/absorbance before test)×100 (%), was obtained. The absorbance at 400 nm was also measured and the percentage of a change in the absorbance at 400 nm, which was represented by ((absorbance after test-absorbance before test)/absorbance before test)×100 (%), was obtained. The heat resistance at respective wavelengths was evaluated using the following standards. For the measurement of the absorbance, a spectrophotometer U-4100 (manufactured by Hitachi High-Technologies Corporation) was used.

A: percentage of change in absorbance≤3%
B: 3%<percentage of change in absorbance≤6%
C: 6%<percentage of change in absorbance≤10%
D: 10%<percentage of change in absorbance

«Evaluation of moisture resistance»

The near-infrared cut-off filters obtained as described above were left to stand at a high temperature and a high humidity of 85°C and a relative humidity of 85% for one hour. The maximum absorbance (Absλmax) at a wavelength in a range of 700 nm to 1400 nm and the minimum absorbance (Absλmin) at a wavelength in a range of 400 nm to 700 nm of each of the near-infrared cut-off filters were measured using a spectrophotometer U-4100 (manufactured by Hitachi High-Technologies Corporation) respectively before and after a moisture resistance test, and the absorbance ratio represented by "Absλmax/Absλmin" was obtained. The percentage of a change in the absorbance ratio represented by (absorbance ratio before test-absorbance ratio after test)/absorbance ratio before test×100|(%) was evaluated using the following standards.

A: percentage of change in absorbance ratio≤2%
B: 2%<percentage of change in absorbance ratio≤4%
C: 4%<percentage of change in absorbance ratio<7%
D: 7%<percentage of change in absorbance ratio

«Evaluation of water absorption rate»

Sufficiently-dried copper complex (polymer copper complex) powder was left to stand under conditions of 25°C and a relative humidity of 95% for five hours (water absorption rate test). The mass before a water absorption rate test was used as a standard, and the percentage of an increase in the mass of the copper complex powder after the water absorption test was computed and was evaluated using the following standards.

A1: 0≤percentage of increase in mass≤3%
A2: 3%<percentage of increase in mass≤10%
B: 10%<percentage of increase in mass≤25%
C: 25%<percentage of increase in mass ≤60%
D: 60%<percentage of increase in mass

[Table 3]

| | Polymer having acid group or salt thereof | Copper component | Equivalent weight of copper [eq.] | Acid value derived from acid group or salt thereof represented by Formula (1) [meq/g] | Near-infrared-ray-absorbing composition | Near-infrared shielding properties | Heat resistance | | Moisture resistance | Water absorption rate |
|---|---|---|---|---|---|---|---|---|---|---|
| | | | | | | | 400 nm | 800 nm | | |
| Example 1 | P-1 | Copper hydroxide | 0.4 | 0 | 1 | B | B | A | B | D |
| Example 2 | P-2 | Copper hydroxide | 0.4 | 0 | 2 | A | C | A | A | C |
| Example 3 | P-3 | Copper hydroxide | 0.4 | 0 | 3 | B | C | A | A | C |
| Example 4 | P-4 | Copper hydroxide | 0.4 | 0 | 4 | B | B | A | A | C |
| Example 5 | P-5 | Copper hydroxide | 0.4 | 0 | 5 | B | B | A | C | D |
| Example 6 | P-6 | Copper hydroxide | 0.4 | 0 | 6 | B | B | A | B | D |
| Example 7 | P-7 | Copper hydroxide | 0.4 | 0 | 7 | A | A | A | A | C |
| Example 8 | P-8 | Copper hydroxide | 0.4 | 0 | 8 | B | A | A | A | C |
| Example 9 | P-9 | Copper hydroxide | 0.4 | 0 | 9 | B | B | A | A | C |
| Example 10 | P-10 | Copper hydroxide | 0.4 | 0 | 10 | A | A | A | A | C |
| Example 11 | P-11 | Copper hydroxide | 0.4 | 0 | 11 | C | B | A | B | D |
| Example 12 | P-12 | Copper hydroxide | 0.4 | 0 | 12 | C | B | A | B | D |
| Example 13 | P-13 | Copper hydroxide | 0.4 | 0.97 | 13 | A | B | B | B | D |

(continued)

| | Polymer having acid group or salt thereof | Copper component | Equivalent weight of copper [eq.] | Acid value derived from acid group or salt thereof represented by Formula (1) [meq/g] | Near-infrared-ray-absorbing composition | Near-infrared shielding properties | Heat resistance | | Moisture resistance | Water absorption rate |
|---|---|---|---|---|---|---|---|---|---|---|
| | | | | | | | 400 nm | 800 nm | | |
| Example 14 | P-14 | Copper hydroxide | 0.4 | 1.01 | 14 | A | B | B | B | D |
| Example 15 | P-15 | Copper hydroxide | 0.4 | 0 | 15 | A | A | A | B | D |
| Example 16 | P-1 | Copper acetate | 0.4 | 0 | 16 | B | B | A | B | D |
| Example 17 | Na salt of P-1 | Copper sulfate | 0.4 | 0 | 17 | B | B | A | B | D |
| Example 18 | P-16 | Copper hydroxide | 0.4 | 0 | 18 | A | A | A | B | D |
| Example 19 | P-17 | Copper hydroxide | 0.4 | 0 | 19 | A | A | A | B | D |
| Example 20 | P-19 | Copper hydroxide | 0.4 | 0 | 20 | A | A | A | A | A-1 |
| Example 21 | P-20 | Copper hydroxide | 0.4 | 0 | 21 | A | A | A | B | D |
| Example 22 | P-21 | Copper hydroxide | 0.4 | 0 | 22 | B | A | A | A | A-1 |
| Comparative Example 1 | P-R1 (infrared shielding resin of Example 1 of JP2010-134457A) | Copper acetate | 0.4 | 3.7< | 23 | B | D | C | B | D |

As is clear from Table 3, the near-infrared-absorbing compositions of the examples were capable of forming a cured film having excellent heat resistance while maintaining high near-infrared shielding properties. In addition, the near-infrared-absorbing compositions of the examples were capable of forming a cured film having excellent moisture resistance. For the near-infrared cut-off filters of the examples, it is also possible to set the light transmissivity at a wavelength in a range of 450 nm to 550 nm to 85% or higher and set the light transmissivity at a wavelength in a range of 800 nm to 900 nm to 20% or lower.

In the near-infrared-absorbing compositions of Examples 1 to 22, even in a case in which the content of the polymer copper complex was set to 15% by mass, 20% by mass, 30% by mass, or 40% by mass of the total solid content of the composition, excellent near-infrared shielding function can be obtained in the same manner as in the near-infrared-absorbing compositions.

In the near-infrared-absorbing compositions of Examples 1 to 22, even in a case in which the content of the solvent (water or 1-methoxy-2-propanol) was set to 10% by mass, 20% by mass, 30% by mass, or 40% by mass, excellent coatability can be obtained in the same manner as in the near-infrared-absorbing composition.

«Example 23»

The following components were mixed together according to the formulation described in Table 4 below, thereby preparing a near-infrared-absorbing composition of Example 23.

- Copper complex A (a copper complex having the following sulfophthalic acid as a ligand)
- Polymer copper complex 1 (near-infrared-absorbing composition 1)
- Binder A below
- Surfactant A below
- Solvent (water)

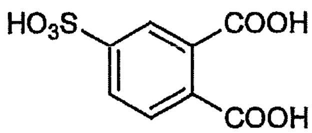

Binder A: the following compound (Mw: 24,000)

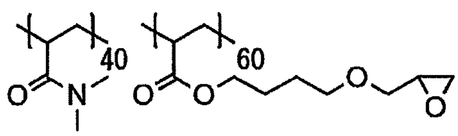

Surfactant A: OLFINE E1010 (manufactured by Nissin Chemical Co., Ltd.)

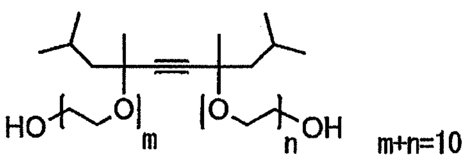

The copper complex A was synthesized as described below.

A 53.1% aqueous solution of sulfophthalic acid (13.49 g, 29.1 mmol) was dissolved in methanol (50 mL), this solution was heated to 50°C, then, copper hydroxide (2.84 g, 29.1 mmol) was added thereto, and a reaction was performed at 50°C for two hours. After the end of the reaction, the solvent and the generated water were distilled away using an evaporator, thereby obtaining a copper complex A (8.57 g).

«Examples 24 to 44»

Near-infrared-absorbing compositions of Examples 24 to 44 were prepared in the same manner as in Example 23 except for that fact that, in the near-infrared-absorbing composition of Example 23, the polymer copper complexes

2 to 22 were respectively used instead of the polymer copper complex 1 obtained in Example 1.

It was confirmed that, in the near-infrared-absorbing compositions of Examples 23 to 44, the near-infrared shielding function was further enhanced.

[Table 4]

| | Copper complex A (29.7 parts by mass) | Polymer copper complex (9.9 parts by mass) | Binder (59.7 parts by mass) | Surfactant (1 part by mass) | Solvent (amount at which the concentration of the total solid content in the composition reaches 20% by mass) |
|---|---|---|---|---|---|
| Example 23 | Copper complex A | Polymer copper complex 1 | Binder A | Surfactant A | Water |
| Example 24 | Copper complex A | Polymer copper complex 2 | Binder A | Surfactant A | Water |
| Example 25 | Copper complex A | Polymer copper complex 3 | Binder A | Surfactant A | Water |
| Example 26 | Copper complex A | Polymer copper complex 4 | Binder A | Surfactant A | Water |
| Example 27 | Copper complex A | Polymer copper complex 5 | Binder A | Surfactant A | Water |
| Example 28 | Copper complex A | Polymer copper complex 6 | Binder A | Surfactant A | Water |
| Example 29 | Copper complex A | Polymer copper complex 7 | Binder A | Surfactant A | Water |
| Example 30 | Copper complex A | Polymer copper complex 8 | Binder A | Surfactant A | Water |
| Example 31 | Copper complex A | Polymer copper complex 9 | Binder A | Surfactant A | Water |
| Example 32 | Copper complex A | Polymer copper complex 10 | Binder A | Surfactant A | Water |
| Example 33 | Copper complex A | Polymer copper complex 11 | Binder A | Surfactant A | Water |
| Example 34 | Copper complex A | Polymer copper complex 12 | Binder A | Surfactant A | Water |
| Example 35 | Copper complex A | Polymer copper complex 13 | Binder A | Surfactant A | Water |
| Example 36 | Copper complex A | Polymer copper complex 14 | Binder A | Surfactant A | Water |
| Example 37 | Copper complex A | Polymer copper complex 15 | Binder A | Surfactant A | Water |
| Example 38 | Copper complex A | Polymer copper complex 16 | Binder A | Surfactant A | Water |
| Example 39 | Copper complex A | Polymer copper complex 17 | Binder A | Surfactant A | Water |
| Example 40 | Copper complex A | Polymer copper complex 18 | Binder A | Surfactant A | Water |
| Example 41 | Copper complex A | Polymer copper complex 19 | Binder A | Surfactant A | Water |

(continued)

| | Copper complex A (29.7 parts by mass) | Polymer copper complex (9.9 parts by mass) | Binder (59.7 parts by mass) | Surfactant (1 part by mass) | Solvent (amount at which the concentration of the total solid content in the composition reaches 20% by mass) |
|---|---|---|---|---|---|
| Example 42 | Copper complex A | Polymer copper complex 20 | Binder A | Surfactant A | Water |
| Example 43 | Copper complex A | Polymer copper complex 21 | Binder A | Surfactant A | Water |
| Example 44 | Copper complex A | Polymer copper complex 22 | Binder A | Surfactant A | Water |

Even in a case in which the copper complex A was changed to the same amount of (seventeen) copper complexes having the following sulfonic acid compounds as ligands in the near-infrared-absorbing compositions of Examples 23 to 44, excellent effects could be obtained in the same manner as in Examples 23 to 44.

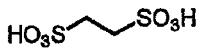
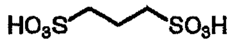

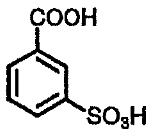
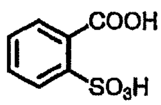
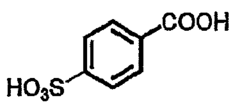

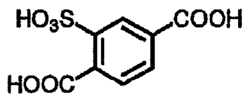
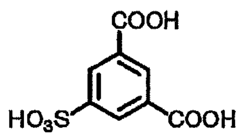

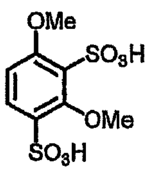
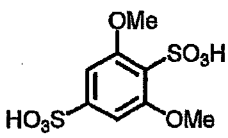
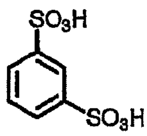
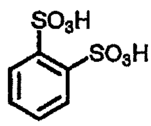
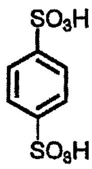

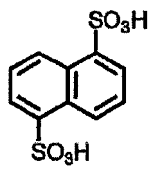
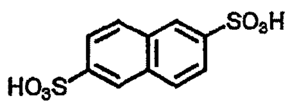
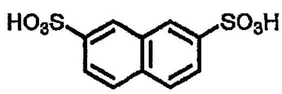
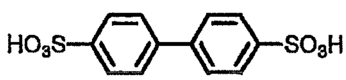

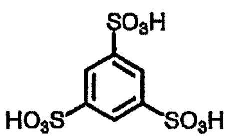

Even in a case in which the surfactant was changed to the same amount of the following surfactants in the near-infrared-absorbing compositions of Examples 23 to 44, excellent effects could be obtained in the same manner as in Examples 23 to 44. In addition, near-infrared cut-off filters can be obtained in the same manner. As the surfactants,

MEGAFAC F171 (manufactured by DIC Corporation), SURFYNOL 61 (manufactured by Nissin Chemical Co., Ltd.), or TORAY SILICONE SF8410 (manufactured by Dow Corning Toray Co., Ltd.) was used.

In addition, even in a case in which the sum of the total amounts of the copper complex A and the polymer copper complex with respect to the total solid content of the composition was set to 15% by mass, 20% by mass, or 30% by mass in the near-infrared-absorbing compositions of Examples 23 to 44, an excellent near-infrared shielding function can be obtained in the same manner as those.

In addition, even in a case in which the content of the solvent (water) was set to 10% by mass, 30% by mass, or 40% by mass in the near-infrared-absorbing compositions of Examples 23 to 44, an excellent near-infrared shielding function can be obtained in the same manner as those.

Explanation of References

1: compound including polymer (A2) having acid group ion and silver ion
2: copper
3: main chain
4: side chain
5: acid group ion site
10: silicon substrate
12: imaging element portion
13: interlayer insulating film
14: base layer
15: color filter
16: overcoat
17: micro lens
18: light-shielding film
20: adhesive
22: insulating film
23: metallic electrode
24: solder resist layer
26: inner electrode
27: element surface electrode
30: glass substrate
40: imaging lens
42: near-infrared cut-off filter
44: light and electromagnetic shield
45: adhesive
46: flattening layer
50: lens holder
60: solder ball
70: circuit board
80: ultraviolet and infrared light-reflecting film
81: transparent base material
82: near-infrared-absorbing layer
83: antireflection layer
100: solid-state imaging element
200: camera module

## Claims

**1.** A near-infrared-absorbing composition comprising:

a compound obtained from a reaction between a polymer (A1) having an acid group or a salt thereof and a copper component.

**2.** The near-infrared-absorbing composition according to claim 1,

wherein an acid value based on an acid structure represented by Formula (1) below in the polymer (A1) is 3.5 meq/g or lower:

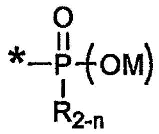
(1)

in Formula (1), R represents a hydrogen atom or a monovalent organic group, n represents 1 or 2, and M represents a hydrogen atom, or an atom or an atomic group constituting a salt; "*" represents a position at which the acid structure is linked to other portions.

**3.** A near-infrared-absorbing composition comprising:

a compound obtained from a reaction between a polymer (A1) having an acid group or a salt thereof and a copper component,
wherein the polymer (A1) does not substantially have an acid structure represented by Formula (1) below:

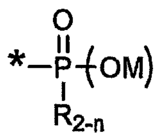
(1)

in Formula (1), R represents a hydrogen atom or a monovalent organic group, n represents 1 or 2, and M represents a hydrogen atom, or an atom or an atomic group constituting a salt; "*" represents a position at which the acid structure is linked to other portions.

**4.** The near-infrared-absorbing composition according to any one of claims 1 to 3,
wherein a percentage of an increase in a mass of the compound obtained from the reaction between the polymer (A1) and the copper component is 25% or lower of the mass thereof before being left to stand under conditions of 25°C and a relative humidity of 95% for five hours.

**5.** The near-infrared-absorbing composition according to any one of claims 1 to 4,
wherein the polymer (A1) includes at least one selected from a carboxylic acid group and a salt thereof, a sulfonic acid group and a salt thereof, an imidic acid group and a salt thereof, and a methide acid group and a salt thereof.

**6.** The near-infrared-absorbing composition according to any one of claims 1 to 4,
wherein the acid group is a carboxylic acid group.

**7.** The near-infrared-absorbing composition according to any one of claims 1 to 4,
wherein the acid group is a sulfonic acid group.

**8.** The near-infrared-absorbing composition according to claim 5 or 7,
wherein an acid value of the polymer (A1), which is derived from the sulfonic acid group or the salt thereof, is 2 meq/g or higher.

**9.** The near-infrared-absorbing composition according to any one of claims 1 to 8,
wherein a weight-average molecular weight of the polymer (A1) is in a range of 6000 to 200,000.

**10.** The near-infrared-absorbing composition according to any one of claims 1 to 9,
wherein the acid group or the salt thereof is included in a side chain of the polymer (A1).

**11.** The near-infrared-absorbing composition according to any one of claims 1 to 10,
wherein the polymer (A1) includes a constitutional unit represented by Formula (A1-1) below:

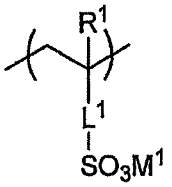

(A 1 − 1)

in Formula (A1-1), $R^1$ represents a hydrogen atom or a methyl group, $L^1$ represents a single bond or a divalent linking group, and $M^1$ represents a hydrogen atom, or an atom or an atomic group constituting a salt with a sulfonic acid group.

**12.** The near-infrared-absorbing composition according to any one of claims 1 to 11,
wherein the polymer (A1) includes a constitutional unit represented by Formula (A1-3) below:

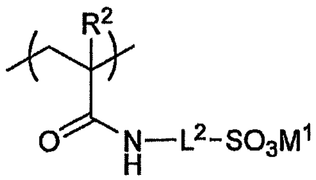

(A 1 − 3)

in Formula (A1-3), $R^2$ represents a hydrogen atom or a methyl group, $L^2$ represents a divalent linking group, and $M^1$ represents a hydrogen atom, or an atom or an atomic group constituting a salt with a sulfonic acid group.

**13.** The near-infrared-absorbing composition according to any one of claims 1 to 12,
wherein the polymer (A1) includes a constitutional unit represented by Formula (A1-4) below:

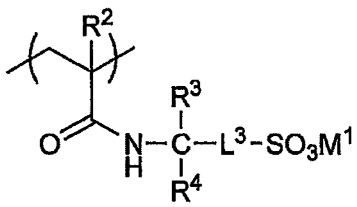

(A 1 − 4)

in Formula (A1-4), $R^2$ represents a hydrogen atom or a methyl group, each of $R^3$ and $R^4$ independently represents a hydrogen atom or an alkyl group, $L^3$ represents a divalent linking group, and $M^1$ represents a hydrogen atom, or an atom or an atomic group constituting a salt with a sulfonic acid group.

**14.** The near-infrared-absorbing composition according to claim 12 or 13,
wherein $L^2$ in Formula (A1-3) or $L^3$ in Formula (A1-4) is a divalent hydrocarbon group.

**15.** The near-infrared-absorbing composition according to claim 12 or 13,
wherein $L^2$ in Formula (A1-3) or $L^3$ in Formula (A1-4) is an alkylene group having 1 to 30 carbon atoms.

**16.** The near-infrared-absorbing composition according to any one of claims 1 to 15, further comprising:

at least one of water or an organic solvent.

**17.** A near-infrared-absorbing composition comprising:

a copper complex having an acid group ion site in a polymer (A2) having an acid group ion, as a ligand, wherein the polymer (A2) does not substantially have an acid structure represented by Formula (1) below:

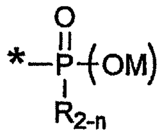

(1)

in Formula (1), R represents a hydrogen atom or a monovalent organic group, n represents 1 or 2, and M represents a hydrogen atom, or an atom or an atomic group constituting a salt; "*" represents a position at which the acid structure is linked to other portions.

**18.** A near-infrared-absorbing composition comprising:

a compound obtained from a reaction between a polymer (A1) having an acid group or a salt thereof and a copper component; and
a copper complex obtained from a reaction between a low-molecular-weight compound having a coordination site and a copper component.

**19.** The near-infrared-absorbing composition according to claim 18,
wherein the low-molecular-weight compound having the coordination site is a low-molecular-weight compound having an acid group or a salt thereof.

**20.** The near-infrared-absorbing composition according to claim 18 or 19,
wherein a molecular weight of the low-molecular-weight compound is 1000 or lower.

**21.** The near-infrared-absorbing composition according to claim 19 or 20,
wherein the low-molecular-weight compound includes at least one of a sulfonic acid group, a carboxylic acid group, and an acid group having a phosphorus atom.

**22.** A near-infrared-absorbing composition comprising:

a near-infrared-absorbing substance,
wherein a percentage of a change in absorbance at a wavelength of 400 nm and a percentage of a change in absorbance at a wavelength of 800 nm before and after the near-infrared-absorbing composition being heated at 200°C for five minutes are both 5% or lower.

**23.** A production method of a near-infrared-absorbing composition, comprising:

a step of producing a polymer (A1) having an acid group or a salt thereof using a polymerizable monomer having an acid group or a salt thereof; and
a step of producing a near-infrared-absorbing compound by reacting the polymer (A1) and a copper component.

**24.** A near-infrared cut-off filter obtained using the near-infrared-absorbing composition according to any one of claims 1 to 22.

**25.** A near-infrared cut-off filter,
wherein a percentage of a change in absorbance at a wavelength of 400 nm and a percentage of a change in absorbance at a wavelength of 800 nm before and after the near-infrared cut-off filter is heated at 200°C for five minutes are both 5% or lower.

**26.** A production method of a near-infrared cut-off filter, comprising:

a step of forming a film by applying the near-infrared-absorbing composition according to any one of claims 1 to 22 to a light-receiving side of a solid-state imaging element.

**27.** A camera module comprising:

a solid-state imaging element; and
a near-infrared cut-off filter disposed on a light-receiving side of the solid-state imaging element,

wherein the near-infrared cut-off filter is the near-infrared cut-off filter according to claim 24 or 25.

FIG. 1

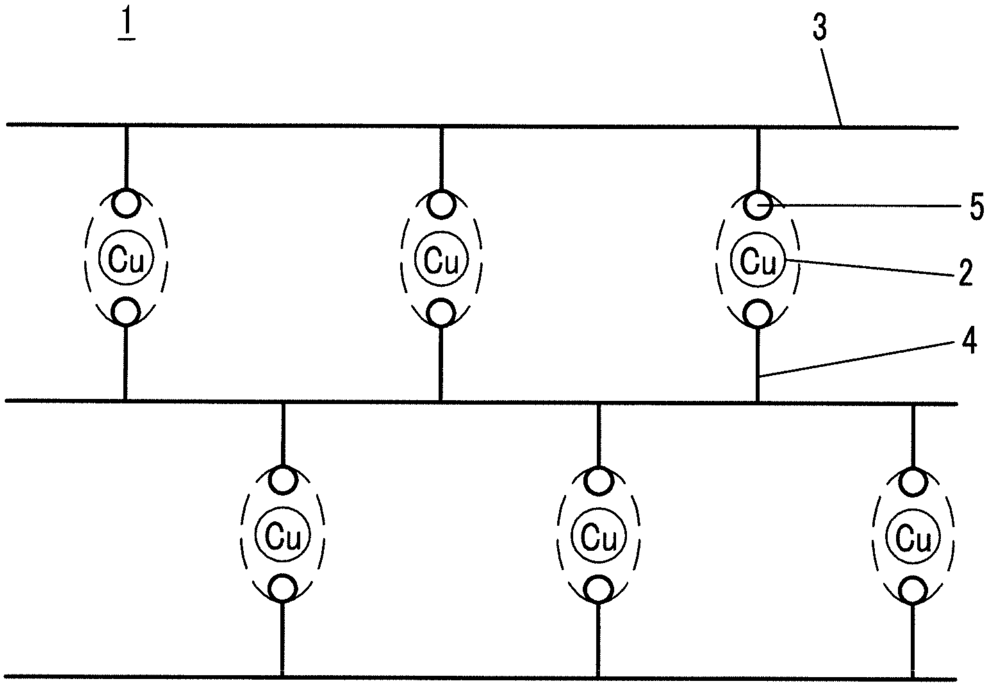


FIG. 2

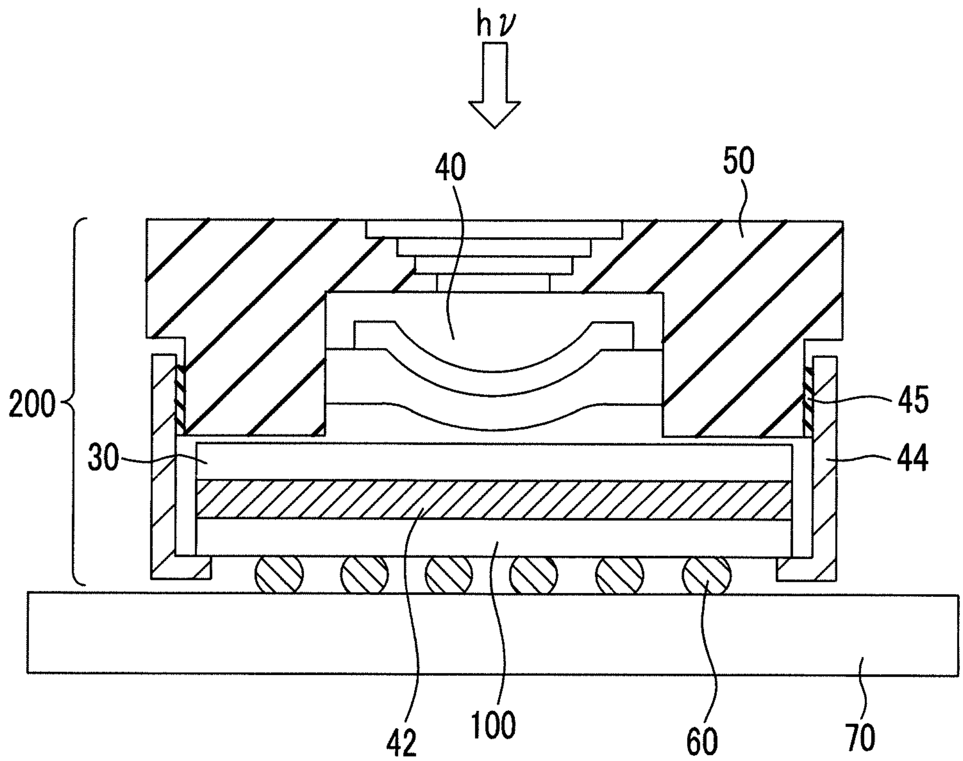

FIG. 3

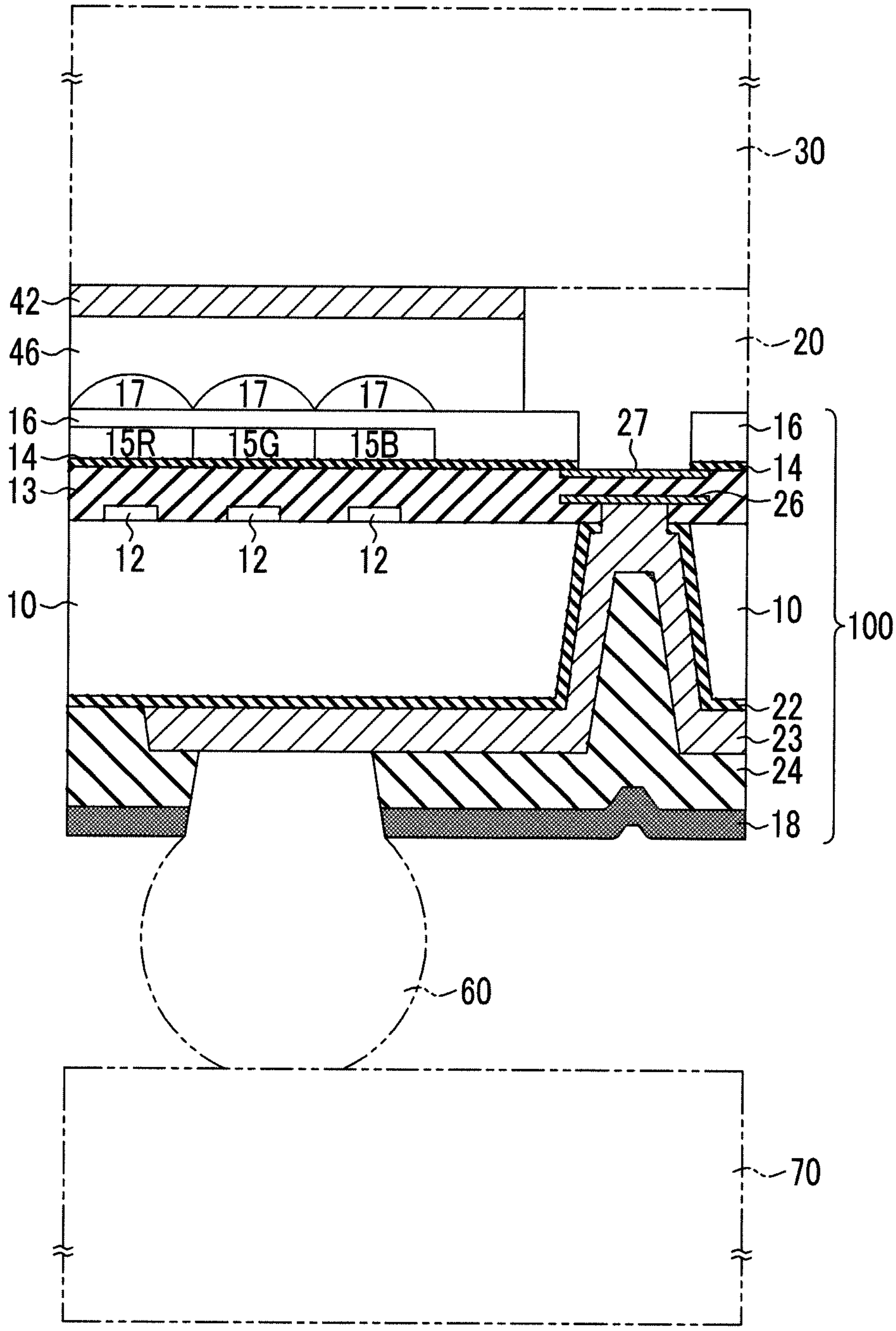
30
42
20
46
17
17
17
16
27
16
15R
15G
15B
14
14
13
26
12
12
12
10
10
100
22
23
24
18
60
70

FIG. 4

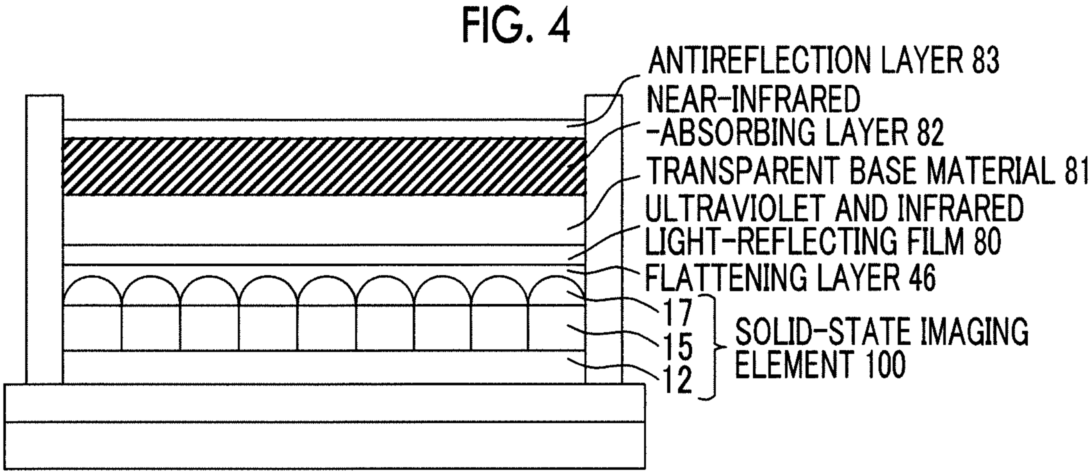


FIG. 5

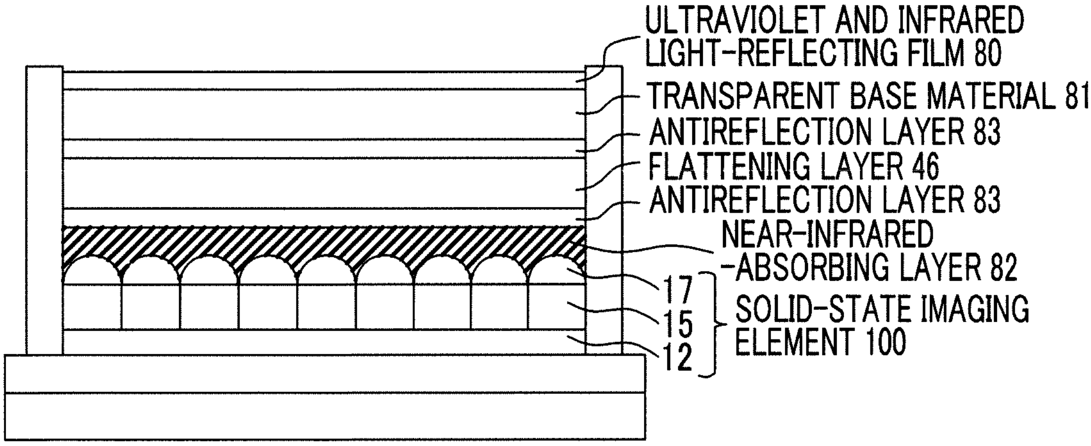


FIG. 6

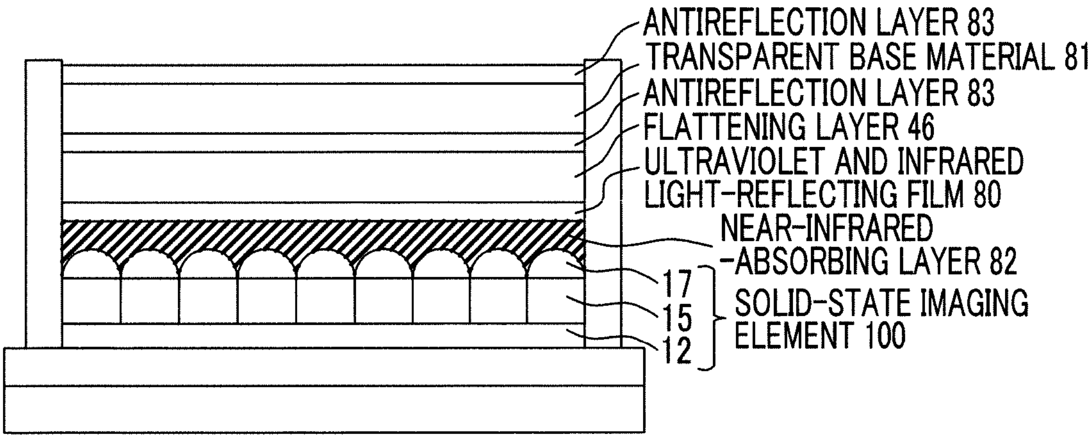

## INTERNATIONAL SEARCH REPORT

International application No. PCT/JP2014/063546

A. CLASSIFICATION OF SUBJECT MATTER
*G02B5/22*(2006.01)i, *C08K3/22*(2006.01)i, *C08L101/06*(2006.01)i

According to International Patent Classification (IPC) or to both national classification and IPC

B. FIELDS SEARCHED

Minimum documentation searched (classification system followed by classification symbols)
G02B5/22, C08K3/22, C08L101/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 6-009818 A (Kabushiki Kaisha Tokyo Seihin Kaihatsu Kenkyusho), 18 January 1994 (18.01.1994), claims; paragraphs [0003] to [0004], [0007], [0010] to [0011]<br>& US 5315443 A & EP 575882 A2<br>& DE 69310028 T & CA 2098797 A1 | 1-9,16-17, 22-25<br>26-27<br>10-15,18-21 |
| X<br>Y<br>A | JP 2009-220450 A (Fujifilm Corp.), 01 October 2009 (01.10.2009), claims 2, 9; paragraphs [0059] to [0080], [0103], [0115] to [0117]<br>(Family: none) | 1,5-16<br>26-27<br>2-4,17-25 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>19 August, 2014 (19.08.14) | Date of mailing of the international search report<br>02 September, 2014 (02.09.14) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2014/063546

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-019322 A (Kureha Chemical Industry Co., Ltd.), 21 January 2000 (21.01.2000), paragraphs [0007] to [0012], [0043]; fig. 1 (Family: none) | 26-27 |
| Y | JP 2000-007870 A (Kureha Chemical Industry Co., Ltd.), 11 January 2000 (11.01.2000), claims 1 to 8; paragraphs [0001], [0067] to [0068] (Family: none) | 26-27 |
| A | JP 11-315215 A (Mitsubishi Rayon Co., Ltd.), 16 November 1999 (16.11.1999), claim 1; paragraphs [0050] to [0051], [0067] (Family: none) | 18-21 |
| A | JP 2008-203081 A (National Institute of Advanced Industrial Science and Technology), 04 September 2008 (04.09.2008), paragraphs [0009] to [0037] (Family: none) | 1-27 |
| P,X | WO 2014/084289 A1 (Fujifilm Corp.), 05 June 2014 (05.06.2014), paragraphs [0001] to [0002], [0028] to [0048], [0168] (Family: none) | 1-27 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010134457 A
- JP 2001213918 A
- JP 2009013200 A
- US 20110124824 A
- JP 2010106268 A
- JP 2012194534 A
- JP 2012208494 A
- US 20120235099 A
- JP 2009288705 A
- JP 2007269779 A
- JP 2012155288 A
- JP 2009265518 A
- JP 2002090991 A
- JP 10291969 A
- JP H10291969 A
- JP 4225898 B
- JP 2001233842 A
- JP 2012003225 A
- US 20130034812 A
- JP 2008250074 A
- US 2012068292 A
- JP 2012068418 A
- JP 2013068688 A